# EUROPÄISCHE PATENTANMELDUNG

(11) **EP 4 516 984 A1**
(43) Veröffentlichungstag der Anmeldung: **05.03.2025**
(21) Anmeldenummer: 24179525.1
(22) Anmeldetag: 03.06.2024
(51) Int. Cl.: D06F 39/02, D06F 33/37, D06F 103/22, D06F 105/42

(54) **DOSIEREINRICHTUNG**

(30) Priorität: 04.09.2023 DE 102023123774
(71) Anmelder: Herbert Saier GmbH, 79194 Gundelfingen (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Dosiereinrichtung (10) zur Dosierung und Zuführung von Medien über Fluidleitungen (14a, 14b, 14c, 14e, 14d, 14e, 14f) zu mehreren Zielgeräten (12a, 12b, 12c), insbesondere zu mehreren gewerblichen textilen Waschmaschinen, wobei die Dosiereinrichtung (10) eine Eingangsscheibe (16) mit mehreren eingangsseitigen Anschlüssen (18a, 18b, 18c, 18d, 18e, 18f, 18g, 18h) umfasst, die jeweils mit einem Behältnis (11a, 11b, 11c) verbindbar sind, und ein relativ zu der Eingangsscheibe (16) verlagerbares Stellglied (17), das eine Mehrzahl von Durchgangskanälen (19a, 19b, 19c, 19e, 19f, 19g, 19h) aufweist, wobei jeder Durchgangskanal (19a, 19b, 19c, 19e, 19f, 19g, 19h) mit einem Zielgerät (12a, 12b, 12c) verbindbar ist, wobei infolge einer Verlagerung des Stellgliedes (17) relativ zu der Eingangsscheibe (16) jeweils wenigstens einer der Durchgangskanäle (19a, 19b, 19c, 19e, 19f, 19g, 19h) mit einem der Anschlüsse (18a, 18b, 18c, 18d, 18e, 18f, 18g, 18h) in kommunikative Verbindung bringbar ist, wobei die Dosiereinrichtung (10) mehrere, von einer Steuerung (20) der Dosiereinrichtung (10) ansprechbare Pumpen (21a, 21b, 21c, 21d, 21e) umfasst, die zur Entnahme von Medium (13a, 13b, 13c) aus dem Behältnis (11a, 11b, 11c) und zu dessen Förderung zu dem Zielgerät (12a, 12b, 12c) ausgebildet sind, und wobei jedem Durchgangskanal (19a, 19b, 19c, 19e, 19f, 19g, 19h) eine Pumpe (21a, 21b, 21c, 21d, 21e) zugeordnet ist, die jeweils stromabwärts des Durchgangskanals (19a, 19b, 19c, 19e, 19f, 19g, 19h) angeordnet ist.

## Beschreibung

Die Erfindung bezieht sich auf eine Dosiereinrichtung nach Anspruch 1.

Die Erfindung stellt Dosiereinrichtungen in den Fokus, mit denen insbesondere unterschiedliche Medien aus unterschiedlichen Behältnissen entnommen und zu unterschiedlichen Zielgeräten hin gefördert werden. Eine solche Dosiereinrichtung kann gemäß den Anforderungen des Zielgerätes das entsprechende Medium auswählen und in dem gewünschten Volumen, also der gewünschten Menge, dem gewünschten Zielgerät zuführen.

Aus der auf die Anmelderin zurückgehenden DE 10 2015 110 862 A1 geht eine Dosiereinrichtung hervor, die eine Verzweigungsstelle aufweist. Die Dosiereinrichtung ermöglicht eine Förderung zu unterschiedlichen Zielgeräten.

Aus der ebenfalls auf die Anmelderin zurückgehenden WO 2013/075962 A1 geht eine Mischverteileinrichtung hervor. Diese kann in einer geometrisch invertierten Anordnung einen Eingang und mehrere Ausgänge aufweisen. Damit kann nur ein Medium zu einer Mehrzahl von Zielgeräten gefördert werden. Aus der Druckschrift geht darüber hinaus eine Reihenschaltung von zwei Mischverteilereinrichtungen hervor. Damit kann eine Mehrzahl von Medien zu einer Mehrzahl von Zielgeräten gefördert werden.

Ausgehend von dem zuletzt beschriebenen Stand der Technik besteht die Aufgabe der Erfindung darin, eine Dosiereinrichtung anzugeben, mit der bei konstruktiv einfachem Aufbau eine sichere Betriebsweise gewährleistet wird.

Die Erfindung löst diese Aufgabe mit den Merkmalen des Anspruches 1.

Das Prinzip der Erfindung besteht im Wesentlichen darin, an der Dosiereinrichtung eine Einheit anzuordnen, die eine Eingangsscheibe und ein relativ dazu verlagerbares Stellglied umfasst. Die Eingangsscheibe und das Stellglied können insbesondere beide aus keramischem Material bestehen.

An der Eingangsscheibe sind eine Mehrzahl eingangsseitiger Anschlüsse angeordnet, die jeweils mit einem Behältnis verbunden werden. Bei einem Ausführungsbeispiel der Erfindung weist die Eingangsscheibe acht eingangsseitige Anschlüsse für Medien, insbesondere für unterschiedliche Medien auf. Dabei können beispielsweise sieben Produktmedien und ein Spülmedium vorgesehen sein.

Als Produktmedium bezeichnet die Erfindung jede Art von Chemikalie oder Chemikalienbestandteil, wie sie üblicherweise in Wasch- oder Reinigungsprozessen, aber auch in Desinfektionsprozessen oder Sterilisationsprozessen, eingesetzt werden können.

Die Zahl der eingangsseitigen Anschlüsse ist freilich beliebig. Die Zahl von acht eingangsseitigen Anschlüssen ist lediglich beispielhaft zu verstehen.

Die Eingangsscheibe kann insbesondere als Kreisscheibe oder im Wesentlichen nach Art einer Kreisscheibe ausgebildet sein.

Das Stellglied kann ebenfalls von einem scheibenförmigen Körper gebildet sein.

Stellglied und Eingangsscheibe können konzentrisch zueinander angeordnet sein. Vorteilhaft ist die Eingangsseite die Stellgliedes auf die Ausgangsseite der Eingangsscheibe vorgespannt und kontaktiert diese.

Das Stellglied kann relativ zu der Eingangsscheibe drehbar angeordnet sein, und zwar vorteilhafterweise verdrehbar um eine Mittellängsachse der Eingangsscheibe. Das Stellglied ist von einem Antrieb, zum Beispiel von einem Elektromotor, ansprechbar und drehantreibbar. Hierzu kann das Stellglied beispielsweise auf seinem Umfang mit einem Zahnrad versehen sein, das von einem Ritzel eines Motors angesprochen werden kann.

Das Stellglied weist gemäß der Erfindung zwei oder mehr Durchgangskanäle auf. Bei einer ersten Variante weist das Stellglied zwei Durchgangskanäle auf.

Bei einer zweiten Variante weist das Stellglied drei Durchgangskanäle auf. Die Zahl der Durchgangskanäle entspricht insbesondere der Zahl der an die Dosiereinrichtung angeschlossenen Zielgeräte.

Die Durchgangskanäle sind ausgangsseitig jeweils mit einem Zielgerät verbunden.

Das Zielgerät kann insbesondere von einer Waschmaschine bereitgestellt sein. Auch andere Arten von Zielgeräten, zum Beispiel Spülmaschinen, sind von der Erfindung umfasst. Insbesondere kommen als Zielgerät alle Arten von Wasch- oder Reinigungsgeräten, Wasch- oder Reinigungsanlagen oder Wasch- oder Reinigungsmaschinen in Betracht.

Stromabwärts jedes Durchgangskanals ist eine Pumpe angeordnet.

Für den Fall, dass das Stellglied zwei Durchgangskanäle aufweist, sind demnach zwei Pumpen vorgesehen.

Für den Fall, dass in dem Stellglied drei Durchgangskanäle angeordnet sind, sind drei Pumpen vorgesehen.

Die Pumpen können insbesondere von Schlauchpumpen gebildet sein, wie sie insbesondere in den eingangs beschriebenen und nachfolgend aufgeführten Patentanmeldungen der Anmelderin beschrieben sind. Auf diese wird hiermit zur Vermeidung von Wiederholungen verwiesen.

Infolge einer Anforderung eines Mediums in einer bestimmten Menge von einem ersten Zielgerät, kann eine Steuerung der Dosiereinrichtung einen motorischen Antrieb des Stellglieds ansprechen und das Stellglied in eine erste Position verlagern. In dieser ersten Position stellt der dem ersten Zielgerät zugeordnete erste Durchgangskanal eine kommunikative Verbindung zu dem Behältnis her, in dem sich das angeforderte Medium befindet.

Die Anordnung und Geometrie der eingangsseitigen Anschlüsse an der Eingangsscheibe und die Positionierung und Geometrie der Durchgangskanäle ist dabei so getroffen, dass, wenn der erste Durchgangskanal eine gewünschte Drehumfangsposition erreicht hat, und mit dem gewünschten eingangsseitigen Anschluss in kommunikative Verbindung gebracht worden ist, dieser Durchgangskanal keine kommunikative Verbindung zu einem anderen Durchgangskanal aufweist.

Der erste Durchgangskanal ist also in dieser Position des Stellgliedes fluid-dicht gegenüber sämtlichen anderen Durchgangskanälen ausgebildet und positioniert.

Die dem ersten Durchgangskanal zugeordnete erste Pumpe kann nun von der Steuerung angesprochen und betrieben werden und das erste Medium in der gewünschten Menge aus dem Behältnis entnehmen und dem ersten Zielgerät zuführen.

Der Betrieb der ersten Pumpe ermöglicht, dass nur das angeforderte Medium gefördert wird. Durch den Betrieb der Pumpe wird kein anderes Medium gefördert. Insbesondere wird infolge eines Betriebes der ersten Pumpe keinerlei Saugwirkung in einem anderen Durchgangskanal generiert.

Der zweite Durchgangskanal kann in der ersten Position des Stellgliedes, also dann, wenn sich der erste Durchgangskanal in einer Produktposition befindet, eine Spülposition oder eine Parkposition einnehmen, ggf. auch eine andere Produktposition einnehmen.

Als Produktposition eines Durchgangskanals wird eine Position bezeichnet, in der der Durchgangskanal mit einem Produktanschluss, also mit einem Produkt-Medium führenden Anschluss, kommuniziert.

Als Spülposition eines Durchgangskanals wird eine Position des Durchgangskanals verstanden, in der der Durchgangskanal mit einem Spülmedium führender Einlass in der Eingangsscheibe kommuniziert.

Als Parkposition eines Durchgangskanals wird eine Position bezeichnet, in der der Durchgangskanal an einer an der Eingangsscheibe angeordneten Sperrfläche anliegt. Die Sperrfläche kann den Durchgangskanal verschließen.

In der ersten Position des Stellgliedes nimmt der erste Durchgangskanal eine erste Produktposition ein.

Der zweite Durchgangskanal nimmt in dieser Position des Stellgliedes ebenfalls eine definierte Position ein, und zwar entweder eine Spülposition oder eine Parkposition, oder eine andere Produktposition.

Die erste Pumpe kann nun von der Steuerung angesprochen werden und das gewünschte Medium fördern, ohne dass eine Beeinflussung der übrigen Kommunikationswege eintritt.

Damit wird eine hohe Betriebssicherheit erreicht.

Angemerkt sei, dass der erste Durchgangskanal und der zweite Durchgangskanal jeweils nach Art einer Bohrung ausgebildet sein kann, die das Stellglied vollständig durchquert, und zwar parallel zu einer Mittelachse des Stellgliedes. Die mehreren Durchgangskanäle sind insbesondere parallel zueinander ausgebildet.

Weiter sei angemerkt, dass die mehreren Durchgangskanäle relativ zueinander eine feste Drehumfangsposition einnehmen. Infolge einer Rotation des Stellgliedes um einen bestimmten Winkel werden sämtliche Durchgangskanäle gemeinsam um denselben Winkel gedreht.

Die Anmelderin ist Inhaberin einer Reihe von Patentanmeldungen, die Dosiereinrichtungen des Standes der Technik beschreiben. Zur Vermeidung von Wiederholungen wird hiermit auf vorbekannte Dosiereinrichtungen der Anmelder verwiesen, die in den deutschen Patentanmeldungen DE 10 2011 108 396 A1, DE 10 2011 119 021 A1, DE 10 2012 012 913 A1, DE 10 2014 002 560 A1, DE 10 2014 010 126 A1, DE 10 2015 110 862 A1, DE 10 2015 107 105 A1, DE 10 2015 170 976 A1, DE 10 2016 102 829 A1, DE 10 2017 114 767 A1, DE 10 2017 103 168 A1, DE 10 2017 114 665 A1, und DE 10 2018 113 644 A1 offenbart sind.

Der Inhalt dieser Patentanmeldungen wird hiermit in den Inhalt der vorliegenden Patentanmeldung mit eingeschlossen, und zwar zum Zwecke des besseren Verständnisses der in der vorliegenden Patentanmeldung beschriebenen technischen Lehre, und auch zu dem Zweck, bei Bedarf einzelne Merkmale oder Merkmalskombinationen aus den zitierten, in Bezug genommenen Patentanmeldungen in den Inhalt der vorliegenden Patentanmeldung, auch in den Inhalt der Ansprüche der vorliegenden Patentanmeldung, mit aufzunehmen.

Es sei angemerkt, dass im Sinne der vorliegenden Erfindung, die in der vorliegenden Patentanmeldung beschriebene Dosiereinrichtung mit jeglichen Merkmalen der aus diesen Patentanmeldungen bekannten Dosiereinrichtungen kombiniert werden kann, soweit nicht hierdurch technische Widersprüche auftreten. All diese denkbaren und möglichen Merkmalskombinationen sind von der Erfindung gemäß der vorliegenden Patentanmeldung explizit umfasst.

Gemäß einer vorteilhaften Ausgestaltung der Erfindung lässt die Dosiereinrichtung einen Betrieb einer Pumpe nur zu, wenn das Stellglied eine Position einnimmt, in der eine kommunikative Verbindung des dieser Pumpe zugeordneten Durchgangskanals zu jedem anderen Durchgangskanal gesperrt ist. Gemäß dieser Ausgestaltung der Erfindung wird eine besonders sichere Betriebsweise ermöglicht. Wenn die erste Pumpe auf der Ausgangsseite des ersten Durchgangssignals einen Saugdruck generiert, wird nur das zu fördernde Medium diesem Saugdruck ausgesetzt. Bei diesem Ausführungsbeispiel wird eine Ansaugung eines ungewünschten Mediums oder eine Beeinträchtigung eines anderen Kommunikationsweges ausgeschlossen. Insbesondere für den Fall, dass die erste Pumpe angetrieben wird, um Spülmedium zu fördern, ist sichergestellt, dass in dieser Position des Stellgliedes kein anderer Durchgangskanal mit einem Spülmitteleinlass kommuniziert.

Bei dieser Ausgestaltung der Erfindung ist somit auch sichergestellt, dass für den Fall, dass der erste Durchgangskanal eine Produktposition einnimmt, der zweite Durchgangskanal oder alle übrigen Durchgangskanäle jeweils eine Produktposition oder eine Spülposition oder eine Parkposition einnehmen. Dadurch, dass alle Durchgangskanäle definierte Positionen einnehmen, wird gewährleistet, dass der Kommunikationsweg, dessen Bestandteil der erste Durchgangskanal ist, von sämtlichen übrigen geschalteten Kommunikationswegen separiert und fluid-dicht getrennt ist.

Gleiches gilt, wenn der erste Durchgangskanal keine Produktposition, sondern eine Spülposition einnimmt. Dann ist in dieser Position des Stellgliedes gewährleistet, dass alle übrigen Durchgangskanäle entweder auf einer Produktposition oder auf einer Parkposition angeordnet sind.

Lediglich für den Fall, dass die Eingangsscheibe unterschiedliche, kommunikativ voneinander getrennte Spülmitteleinlässe bereitstellt, können mehrere Durchgangskanäle gleichzeitig eine Spülposition einnehmen und mit den getrennten Spülmitteleinlässen verbunden sein.

Gemäß einer vorteilhaften Ausgestaltung der Erfindung sind mit der Dosiereinrichtung zwei Pumpen zur Förderung von Medien gleichzeitig betreibbar. Gemäß dieser Ausgestaltung der Erfindung kann eine besonders effiziente Betriebsweise der Dosiereinrichtung erreicht werden. Damit kann eine Förderung eines ersten Mediums an das Zielgerät und gleichzeitig eine Förderung eines zweiten Mediums zu einem zweiten Zielgerät durchgeführt werden.

Gemäß einer vorteilhaften Ausgestaltung der Erfindung sind die mehreren Durchgangskanäle entlang der gleichen Richtung durchströmbar. Diese Ausgestaltung der Erfindung ermöglicht eine Bereitstellung besonders einfacher Anschlussmöglichkeiten. Sämtliche Eingangsstutzen für die eingangsseitigen Anschlüsse können insbesondere auf der Eingangsseite der Eingangsscheibe angeordnet sind und sämtliche Ausgangsstutzen für die ausgangsseitigen Anschlüsse können auf der Ausgangsseite des Stellglieds angeordnet sein.

Sämtliche Medien durchströmen die Dosiereinrichtung damit ausschließlich von der Eingangsseite der Eingangsscheibe zur Ausgangsseite der Eingangsscheibe.

Gemäß einer vorteilhaften Ausgestaltung der Erfindung sind die mehreren Durchgangskanäle jeweils geradlinig ausgebildet. Diese Ausgestaltung der Erfindung ermöglicht eine besonders sichere Betriebsweise, da keine Toträume entstehen, in den sich Materialansammlungen bilden können.

Gemäß einer vorteilhaften Ausgestaltung der Erfindung ist von jedem Durchgangskanal wenigstens eine Produktposition einnehmbar, in der er mit einem Produkt-Medium-führenden Eingangsanschluss kommuniziert. Diese Ausgestaltung der Erfindung bietet die Möglichkeit, dass jeder der Durchgangskanäle eine Produktposition einnehmen kann. Damit wird eine effiziente Betriebsweise ermöglicht.

Zur Klarstellung sei darauf hingewiesen, dass der Begriff Medium im Sinne der vorliegenden Patentanmeldung jede Art von förderfähigen Fluid umfasst, zum Beispiel Chemikalien, aber auch Spülmedien. Als Produktmedium werden im Unterschied zu dem Spülmedium nur solche Stoffe, also Chemikalien, verstanden, die bei Wasch- oder Reinigungsprozessen eingesetzt werden.

Gemäß einer vorteilhaften Ausgestaltung der Erfindung ist von jedem Durchgangskanal wenigstens eine Spülposition einnehmbar, in der er mit einem Spülmedium-führenden Eingangsanschluss kommuniziert. Gemäß dieser Ausgestaltung der Erfindung besteht die Möglichkeit, dass nach jeder Förderung von Produktmedium durch einen Durchgangskanal der Durchgangskanal mit Spülmedium gespült werden kann.

Gemäß einer vorteilhaften Ausgestaltung der Erfindung ist von jedem Durchgangskanal wenigstens eine Parkposition einnehmbar, in der er weder mit einem Spülmedium-führenden Eingangsanschluss kommuniziert noch mit einem Medium-führenden Eingangsanschluss kommuniziert. Diese Ausgestaltung der Erfindung ermöglicht eine besonders sichere Betriebsweise. Wird ein erster Durchgangskanal nicht benötigt und soll zu einem bestimmten Zeitpunkt durch einen zweiten Durchgangskanal hindurch Produktmedium oder Spülmedium gefördert werden, kann der nicht benötigte erste Durchgangskanal in eine Parkposition verfahren und in dieser vollständig verschlossen werden. Eine ungewünschte Beeinträchtigung bei einem Betrieb der Pumpe wird damit ausgeschlossen.

Gemäß einer vorteilhaften Ausgestaltung der Erfindung ist der eine Parkposition einnehmende Durchgangskanal von einer Eingangsscheiben-seitigen Sperrfläche verschlossen. Diese Ausgestaltung der Erfindung bietet die Möglichkeit einer besonders einfachen Konstruktion.

Gemäß einer vorteilhaften Ausgestaltung der Erfindung ist eine Anordnung der Durchgangskanäle relativ zueinander in dem Stellglied und eine Anordnung der eingangsseitigen Anschlüsse an der Eingangsscheibe derart getroffen, dass in jeder Position des Stellgliedes relativ zu der Eingangsscheibe jeweils nur höchstens ein Durchgangskanal eine Produktposition einnimmt. Diese Ausgestaltung der Erfindung bietet eine besonders sichere Betriebsweise.

Gemäß einer vorteilhaften Ausgestaltung der Erfindung ist eine Anordnung der Durchgangskanäle relativ zueinander in dem Stellglied und eine Anordnung der eingangsseitigen Anschlüsse in der Eingangsscheibe derart getroffen, dass in wenigstens einer Position des Stellgliedes relativ zu der Eingangsscheibe zwei Durchgangskanäle eine Produktposition einnehmen. Diese Ausgestaltung der Erfindung ermöglicht eine besonders schnelle Förderung von Medien und einem gleichzeitigen Betrieb mehrerer Pumpen.

Gemäß einer vorteilhaften Ausgestaltung der Erfindung ist wenigstens ein eingangsseitiger Anschluss als Spülmedium-Anschluss ausgebildet. Diese Ausgestaltung der Erfindung ermöglicht auf einfache Weise ein regelmäßiges Spülen der Durchgangskanäle. Insbesondere kann erfindungsgemäß vorgesehen sein, dass nach jeder Förderung eines Produktmediums der Durchgangskanal mit einem Spülmedium gespült wird. Besonders vorteilhaft kann daher der Spülmedienanschluss derart ausgebildet sein, dass ein Durchgangskanal ausgehend von einer Produktposition durch relative Drehung in jedem Drehsinne eine Spülposition erreicht, bevor er in Folge weiterer Drehung eine weitere Produktposition erreicht.

Gemäß einer vorteilhaften Ausgestaltung der Erfindung führt die Steuerung der Dosiereinrichtung nach Erhalt eines Anforderungssignals von wenigstens einem der Zielgeräte einen Dosierprozess durch, und nimmt hierzu unter Zuhilfenahme wenigstens einer der Pumpen eine Entnahme eines vorherbestimmten Volumens an Medium aus dem Behältnis und eine Förderung dieses Volumens hin zu einem Zielgerät vor. Diese Ausgestaltung der Erfindung ermöglicht eine besonders sichere Betriebsweise der Dosiereinrichtung.

Gemäß einer vorteilhaften Ausgestaltung der Erfindung ist jeweils ein eingangsseitiger Anschluss mit einem Behältnis verbunden. Diese Ausgestaltung der Erfindung ermöglicht einen Rückgriff auf herkömmliche Bauarten von Dosiereinrichtungen.

Gemäß einer vorteilhaften Ausgestaltung der Erfindung sind mehrere Behältnisse vorgesehen sind, die mit unterschiedlichen Medien befüllt. Diese Ausgestaltung der Erfindung ermöglicht einen besonders effizienten Betrieb mehrerer Zielgeräte.

Gemäß einer vorteilhaften Ausgestaltung der Erfindung umfassen die eingangsseitigen Anschlüsse sieben Produkt-Medium-Anschlüsse und einen Spülmedium-Anschluss. Diese Ausgestaltung der Erfindung ermöglicht eine Abdeckung eines breiten Spektrums unterschiedlicher Einsatzzwecke einer erfindungsgemäßen Dosiereinrichtung.

Gemäß einer vorteilhaften Ausgestaltung der Erfindung umfassen die eingangsseitigen Anschlüsse auf einer Ausgangsseite der Eingangsscheibe angeordnete Mündungsöffnungen. Diese Ausgestaltung der Erfindung ermöglicht eine besonders einfache Konstruktion.

Gemäß einer vorteilhaften Ausgestaltung der Erfindung sind die Mündungsöffnungen äquidistant voneinander angeordnet. Diese Ausgestaltung der Erfindung ermöglicht eine besonders einfache Konstruktion und eine einfache Betriebsweise sowie eine einfache Steuerung.

Gemäß einer vorteilhaften Ausgestaltung der Erfindung sind die Mündungsöffnungen von Werkstoffbereichen der Eingangsscheibe umrandet.

Gemäß einer weiteren vorteilhaften Ausgestaltung der Erfindung stellen die Werkstoffbereiche Sperrflächen bereit, mit denen ein Durchgangskanal verschließbar. Diese Ausgestaltung der Erfindung ermöglicht eine besonders einfache Anordnung von Sperrflächen.

Gemäß einer vorteilhaften Ausgestaltung der Erfindung sind beidseitig benachbart mehrerer oder sämtlicher Mündungsöffnungen Sperrflächen angeordnet. Diese Ausgestaltung der Erfindung ermöglicht eine besonders einfache Konstruktion und eine sichere Betriebsweise.

Gemäß einer vorteilhaften Ausgestaltung der Erfindung weisen die Werkstoffbereiche eine Breite auf, die zumindest geringfügig größer ist als ein Innendurchmesser einer eingangsscheibenseitigen Mündung eines Durchgangskanals. Diese Ausgestaltung der Erfindung ermöglicht eine besonders einfache Konstruktion und eine sichere Betriebsweise.

Gemäß einer vorteilhaften Ausgestaltung der Erfindung weist das Stellglied zwei Durchgangskanäle auf. Diese Ausgestaltung der Erfindung ermöglicht eine Förderung unterschiedlicher Medien zu zwei Zielgeräten.

Gemäß einer vorteilhaften Ausgestaltung der Erfindung schließen die beiden Durchgangskanäle miteinander einen Winkel zwischen 90° und 140° ein, insbesondere einen Winkel von etwa 112,5°. Diese Ausgestaltung der Erfindung ermöglicht eine besonders einfache Konstruktion zur Erzielung der gewünschten Drehumfangspositionen.

Gemäß einer vorteilhaften Ausgestaltung der Erfindung ist eine Anordnung der beiden Durchgangskanäle relativ zueinander in dem Stellglied und eine Anordnung der eingangsseitigen Anschlüsse an der Eingangsscheibe derart getroffen, dass immer dann, wenn einer der beiden Durchgangskanäle eine Produktposition einnimmt, der andere Durchgangskanal eine Spülposition einnimmt. Diese Ausgestaltung der Erfindung ermöglicht eine besonders einfache Konstruktion. Diese Ausgestaltung der Erfindung ermöglicht auch eine sichere Betriebsweise.

Gemäß einer vorteilhaften Ausgestaltung der Erfindung weist das Stellglied drei Durchgangskanäle auf. Diese Ausgestaltung der Erfindung ermöglicht eine Förderung von Medien zu drei Zielgeräten.

Gemäß einer vorteilhaften Ausgestaltung der Erfindung schließen jeweils zwei der drei Durchgangskanäle miteinander einen Winkel zwischen 60° und 100° ein, insbesondere einen Winkel von 78,5° oder von etwa 78,5°. Diese Ausgestaltung der Erfindung ermöglicht eine besonders einfache Konstruktion.

Gemäß einer vorteilhaften Ausgestaltung der Erfindung ist eine Anordnung der drei Durchgangskanäle relativ zueinander in dem Stellglied und eine Anordnung der eingangsseitigen Anschlüsse an der Eingangsscheibe derart getroffen, dass immer dann, wenn einer der drei Durchgangskanäle eine Produktposition einnimmt, nur einer der beiden übrigen Durchgangskanäle eine Spülposition einnimmt. Diese Ausgestaltung der Erfindung ermöglicht auch eine sichere Betriebsweise.

Die Erfindung bezieht sich des Weiteren auf ein Verfahren nach Anspruch 15.

Der Erfindung liegt die Aufgabe zugrunde, ein Verfahren anzugeben, mit den Medien auf einfache Weise zu mehreren Zielgeräten gefördert werden können.

Die Erfindung löst diese Aufgabe mit den Merkmalen des Anspruches 15.

Die zuvor bezüglich der erfindungsgemäßen Dosiereinrichtung beschriebenen Merkmale und Vorteile können gleichermaßen oder analog auch bei dem erfindungsgemäßen Verfahren Anwendung finden.

Zur Vermeidung von Wiederholungen wird daher auf die vorherigen Ausführungen verwiesen.

Gemäß einer vorteilhaften Ausführung der Erfindung ist das Verfahren gekennzeichnet durch den Schritt:
g) Verlagern des Stellgliedes relativ zu der Eingangsscheibe derart, dass der dem ersten Zielgerät zugeordnete erste Durchgangskanal mit einem Anschluss in kommunikative Verbindung gebracht wird, an dem ein Spülmedium ansteht, und
h) Ansprechen der ersten Pumpe zur Entnahme von Spülmedium und zum Fördern des Spülmediums zwecks Spülen des ersten Durchgangskanals.

Weitere Vorteile der erfindungsgemäßen Dosiereinrichtung und des erfindungsgemäßen Verfahrens ergeben sich anhand der nicht zitierten Unteransprüche sowie aus der nachfolgenden Beschreibung der in den Zeichnungen dargestellten Ausführungsbeispiele.

Darin zeigen:
- Fig. 1: in einer schematischen perspektivischen Ansicht in Alleindarstellung eine Eingangsscheibe einer Mischverteilereinrichtung einer erfindungsgemäßen Dosiereinrichtung bei Betrachtung der Ausgangsseite der Eingangsscheibe,
- Fig. 2: die Eingangsscheibe der Fig. 1 in einer Rückansicht gemäß Ansichtspfeil II in Fig. 1, wobei zusätzlich beispielhaft ein Eingangsstutzen gestrichelt angedeutet ist,
- Fig. 3: in einer schematischen perspektivischen Ansicht in Alleindarstellung ein Stellglied unter Darstellung der Eingangsseite des Stellgliedes, wobei das Stellglied zwei Durchgangskanäle aufweist,
- Fig. 4: das Stellglied der Fig. 3 in einer Rückansicht, etwa gemäß Ansichtspfeil IV in Fig. 3,
- Fig. 5: in einer schematischen Darstellung eine Mischverteilereinheit einer erfindungsgemäßen Dosiereinrichtung mit Eingangsscheibe und Stellglied im montierten Zustand in Seitenansicht, mit zwei angedeuteten Eingangsstutzen und zwei Ausgangsstutzen,
- Fig. 6: die Eingangsscheibe der Fig. 1 in einer schematischen Draufsicht etwa entlang Ansichtspfeil VI in Fig. 1 in Alleindarstellung,
- Fig. 7: das Stellglied der Fig. 3, vereinfacht ohne Darstellung des Zahnrades, in einer Vorderansicht, etwa entlang Ansichtspfeil VII in Fig. 3, wobei das Stellglied gegenüber der Darstellung in Fig. 3 um etwa 120° im Uhrzeigersinn gedreht ist,
- Fig. 8: die Mischverteilereinheit der Fig. 5 schematisch, in vereinfachter Darstellung, mit der Eingangsscheibe in einer Darstellung gemäß Fig. 6, unter Veranschaulichung einer Position des Stellgliedes unter Andeutung der Position der beiden Durchgangskanäle in dem Stellglied gemäß der Fig. 3, wobei die Darstellung der Fig. 8 etwa einer gedachten, schematischen teilgeschnittenen Darstellung gemäß Schnittlinie VIII - VIII in Fig. 5 entspricht,
- Fig. 9: die Mischverteilereinheit der Fig. 8 mit einer geänderten Position des Stellgliedes,
- Fig. 10: die Mischverteilereinrichtung der Fig. 9 mit einer geänderten Position des Stellgliedes,
- Fig. 11: die Mischverteilereinrichtung der Fig. 10 mit einer geänderten relativen Position des Stellgliedes,
- Fig. 12: ein weiteres Ausführungsbeispiel eines Stellgliedes mit zwei Durchgangskanälen in einer Darstellung gemäß Fig. 7, wobei der Winkelabstand zwischen den beiden Durchgangskanälen gegenüber dem Ausführungsbeispiel der Fig. 7 geändert ist,
- Fig. 13: ein Ausführungsbeispiel einer Mischverteilereinrichtung einer erfindungsgemäßen Dosiereinrichtung in einer Darstellung gemäß Fig. 8, unter Verwendung eines Stellgliedes gemäß Fig. 12, in einer ersten relativen Position des Stellgliedes,
- Fig. 14: die Mischverteilereinrichtung der Fig. 13 mit einer zweiten Position des Stellgliedes,
- Fig. 15: die Mischverteilereinrichtung der Fig. 14 mit einer geänderten Position des Stellgliedes,
- Fig. 16: die Mischverteilereinrichtung der Fig. 15 mit einer geänderten Position des Stellgliedes,
- Fig. 17: in einer blockschaltbildartigen Prinzipdarstellung ein Ausführungsbeispiel einer erfindungsgemäßen Dosiereinrichtung, die eine zuvor erläuterte Mischverteilereinheit umfasst, und die mit drei Behältnissen und zwei Zielgeräten über Fluidleitungen verbunden ist,
- Fig. 18: ein weiteres Ausführungsbeispiel eines Stellgliedes einer erfindungsgemäßen Dosiereinrichtung in einer Darstellung gemäß Fig. 7, wobei das Stellglied drei Durchgangskanäle aufweist,
- Fig. 19: eine Mischverteilereinrichtung einer erfindungsgemäßen Dosiereinrichtung in einer Darstellung gemäß Fig. 8 unter Verwendung des Stellgliedes gemäß Fig. 18, mit einer ersten Position des Stellgliedes,
- Fig. 20: die Mischverteilereinrichtung der Fig. 19, mit einer geänderten Stellgliedposition,
- Fig. 21: die Mischverteilereinrichtung der Fig. 20, mit einer weiter geänderten Stellgliedposition,
- Fig. 22: ein weiteres Ausführungsbeispiel einer erfindungsgemäßen Dosiereinrichtung in einer Darstellung gemäß Fig. 17, wobei an die Dosiereinrichtung ausgangsseitig drei Zielgeräte angeschlossen sind, und
- Fig. 23: ein weiteres Ausführungsbeispiel einer erfindungsgemäßen Dosiereinrichtung in einer Darstellung gemäß Fig. 17, wobei zwei Pumpen zu einer Pumpeneinheit zusammengefasst sind.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

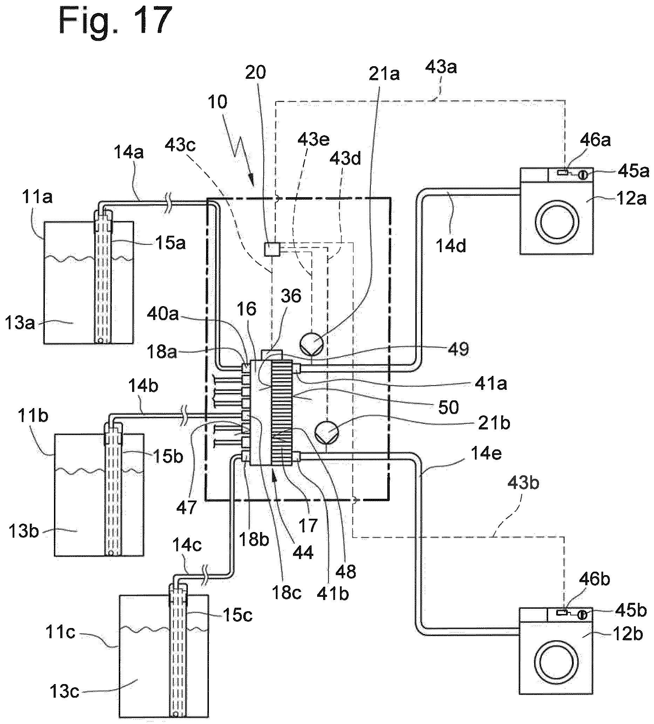

Ein Ausführungsbeispiel einer erfindungsgemäßen Dosiereinrichtung wird in den Zeichnungen in seiner Gesamtheit mit dem Bezugszeichen 10 bezeichnet und ist in Fig. 17 blockschaltbildartig dargestellt.

Die Dosiereinrichtung 10 ist in Fig. 17 durch einen gestrichelten Rahmen angedeutet.

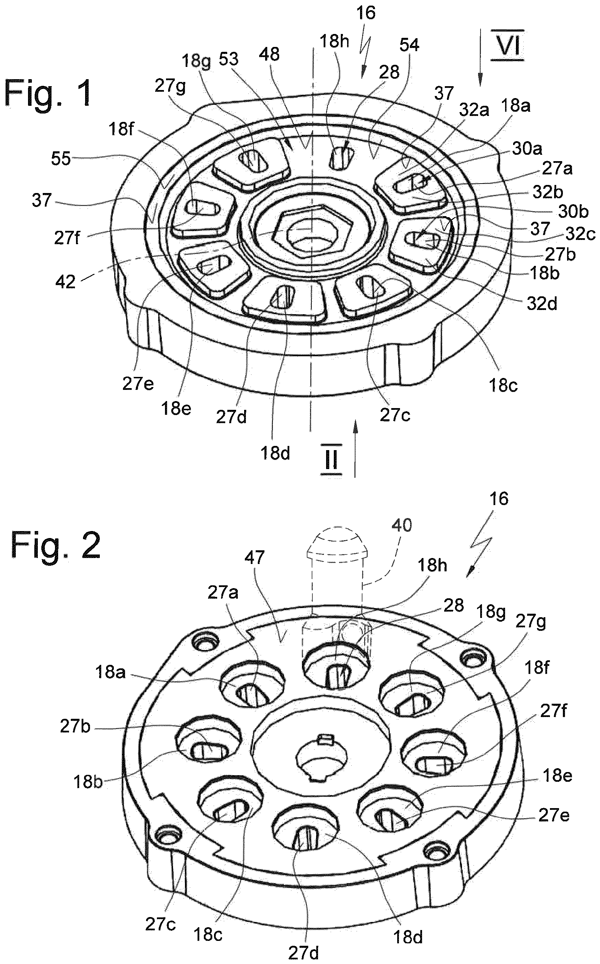

Gemäß Fig. 17 ist die Dosiereinrichtung 10 eingangsseitig mit Behältnissen 11 verbunden, wobei nur drei Behältnisse 11a, 11b, 11c dargestellt sind. Tatsächlich verfügt dieses Ausführungsbeispiel einer erfindungsgemäßen Dosiereirichtung 10 über acht eingangsseitige Anschlüsse 18a, 18b, 18c, 18d, 18e, 18f, 18g, 18h (vgl. Fig. 2) von denen in Fig. 17 aber nur die Anschlüsse 18a, 18b und 18c bezeichnet sind.

Die Dosiereinrichtung 10 dient zur Entnahme von Medien 13a, 13b, 13c aus dem jeweiligen Behältnis 11a, 11b, 11c und zur Förderung des entsprechenden Mediums 13a, 13b, 13c zu einem Zielgerät 12a, 12b. Ausgangsseitig ist die Dosiereinrichtung 10 mit zwei Zielgeräten 12a, 12b verbunden. Bei dem Aufführungsbeispiel der Fig. 17 sind die Zielgeräte 12a, 12b jeweils von einer Waschmaschine gebildet.

Die Behältnisse 11a, 11b, 11c sind über Fluidleitungen 14a, 14b, 14c mit der Dosiereinrichtung verbunden. Die Dosiereinrichtung 10 ist ausgangsseitig über Fluidleitungen 14d, 14e mit den Zielgeräten 12a, 12b verbunden. Zur Entnahme der Medien 13a, 13b, 13c aus dem jeweiligen Behältnis 11 a, 11b, 11c können, wie Fig. 17 andeutet, Sauglanzen 15a, 15b, 15c vorgesehen sein.

Die Dosiereinrichtung 10 umfasst eine Mischverteileinrichtung 44 mit einer stationären, feststehenden Eingangsscheibe 16 und mit einem relativ dazu verstellbaren Stellglied 17. Das Stellglied 17 kann unterschiedliche Dreh-Positionen relativ zu der Eingangsscheibe 16 einnehmen und in unterschiedlichen Dreh-Positionen unterschiedliche Kommunikationswege zwischen den eingangsseitigen Anschlüssen 18a, 18b, 18c, und den Zielgeräten 12a, 12b schalten. Hierzu sind in dem Stellglied 17 mehrere Durchgangskanäle 19a, 19b angeordnet.

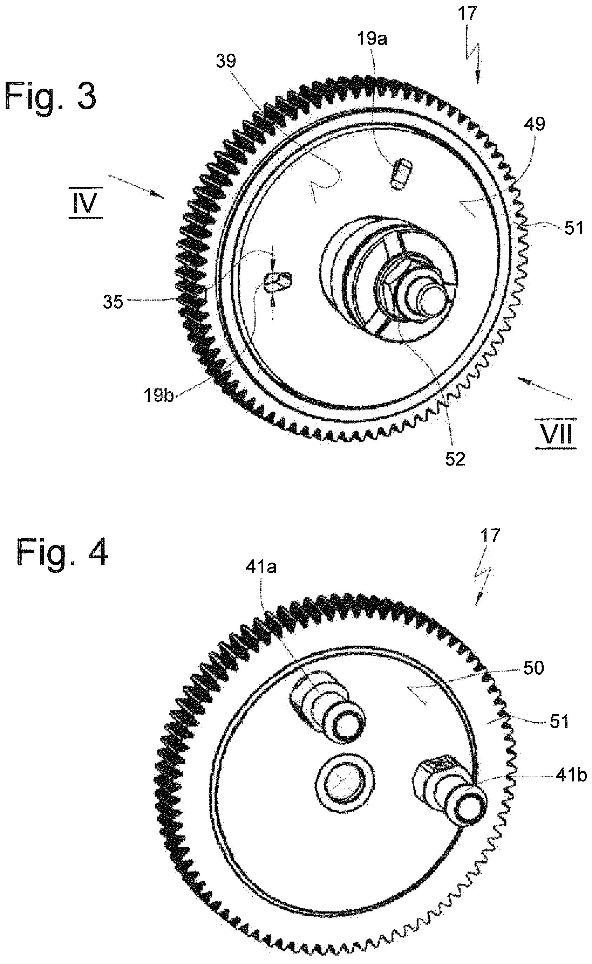

Bei dem Ausführungsbeispiel der Fig. 17 sind, zwei Durchgangskanäle 19a, 19b in dem Stellglied 17 angeordnet. Diese sind in Fig. 17 nicht dargestellt. Die Mischverteilereinrichtung 44 der Dosiereinrichtung 10 gem. Fig. 17 verwendet aber beispielsweise ein Stellglied 17 gemäß Figuren 3, 4 und 7 mit zwei Durchgangskanälen 19a, 19b.

Die Zahl der Durchgangskanäle 19a, 19b entspricht insbesondere bei allen Ausführungsbeispielen der Erfindung der Zahl der an die Dosiereinrichtung 10 angeschlossenen Zielgeräte 12a, 12b.

Die Funktionsweise der Dosiereinrichtung 10 wird unter Bezugnahme auf Fig. 17 wie folgt erläutert:
Eine Steuerung 20 der Dosiereinrichtung 10 kann zum Beispiel über eine elektrische Signal- und/ oder Verbindungsleitung 43a von einer Steuerung 46a des ersten Zielgerätes 12a in Folge einer Betätigung des Programmwahlschalters 45a des Zielgerätes 12a - zu einem bestimmten Zeitpunkt, insbesondere während eines Waschprogrammes - ein Anforderungssignal oder ein Anforderungskommando erhalten, wonach eine bestimmte Menge eines bestimmten Mediums 13a von dem ersten Zielgerät 12a angefordert wird.

Daraufhin kann die Steuerung 20 über eine Signalleitung 43 einen Antrieb 36, zum Beispiel einen Motor, ansprechen, der das Stellglied 17 in eine bestimmte Drehumfangsposition verlagern kann, in der der entsprechende Durchgangskanal, zum Beispiel der erste Durchgangskanal 19a, mit dem Behältnis 11a, in dem sich das angeforderte Medium 13a befindet, in kommunikativer Verbindung steht. Sodann kann die Steuerung 20 der Dosiereinrichtung 10 die erste Pumpe 21a zur Förderung des Mediums 13a ansprechen und damit in Betrieb setzen.

Bei der Pumpe 21a kann es sich zum Beispiel um eine Schlauchpumpe handeln.

Die erste Pumpe 21a ist stromabwärts des ersten Durchgangskanals 19a angeordnet und sorgt in Folge eines Ansprechens durch die Steuerung 20 für einen Saugdruck auf der Ausgangsseite des Durchgangskanals 19a. Dadurch wird das Medium 13a aus dem Behältnis 11a, entnommen, und durch die Fluidleitungen 14a, 14d hindurch zum Zielgerät 12a hin gefördert.

Über die Länge der Laufzeit der Pumpe 21a oder über die Zahl der Drehungen eines Motors der Schlauchpumpe 21a oder über einen anderen Parameter der Pumpe 21a wird unter Berücksichtigung der Förderleistung der Pumpe 21a das zu fördernde Volumen bestimmt.

Für den Fall, dass nachfolgend das Zielgerät 12b mittels der Steuereinheit 46b über die Verbindungsleitung 43b ein Anforderungskommando für das Medium 13c an die Steuerung 20 übermittelt, insbesondere infolge eines Einstellens des Programmwahlschalters 45b, kann das Stellglied 17 wiederum von dem Antrieb 36 in eine geänderte Drehumfangsposition verlagert werden. Nunmehr ist ein Kommunikationsweg zwischen dem Behältnis 11c und dem zweiten Zielgerät 12b freigeschaltet. Die Steuerung 20 kann sodann die Pumpe 21 b ansprechen, um das Medium 13c zu fördern.

Die Förderung des Mediums 13c zu dem zweiten Zielgerät 12b erfolgt nicht durch den ersten Durchgangskanal 19a hindurch, sondern durch den zweiten Durchgangskanal 19b hindurch. Der zweite Durchgangskanal 19b ist dem zweiten Zielgerät 19b fest zugeordnet.

Jedes Mal, wenn ein Durchgangskanal 19a, 19b mit Medium 13a, 13b, 13c durchströmt wurde, kann nachfolgend eine Spülung des entsprechenden Durchgangskanals 19a, 19b mit Spülmedium, also zum Beispiel mit Wasser, erfolgen. Dies wird später noch beschrieben.

Wesentlich für die Funktion und den Betrieb der Dosiereinrichtung 10 ist, dass, wenn eine Pumpe, zum Beispiel die Pumpe 21a, angesprochen wird, um Medium 13a durch den zugeordneten ersten Durchgangskanal 19a zu fördern, dieser Durchgangskanal 19a gegenüber sämtlichen anderen Durchgangskanälen fluid-dicht ausgebildet ist. Ein Betrieb der Pumpe 21a kann also die Druckverhältnisse in den übrigen Durchgangskanälen 19b nicht beeinflussen. Damit wird gewährleistet, dass nur das Medium 19a gefördert wird, das von dem Zielgerät 21a angefordert worden ist.

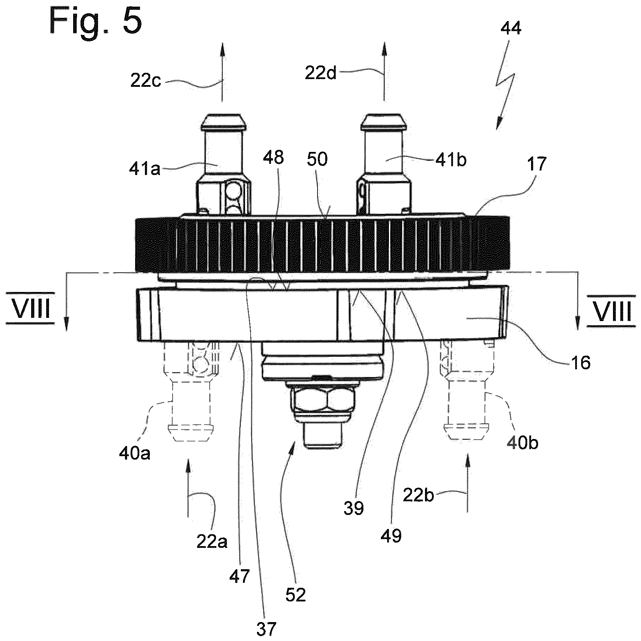

Zur Erläuterung der Funktionsweise der Dosiereinrichtung 10 wird zunächst anhand der Ausführungsbeispiele der Figuren 1 bis 11 in Verbindung mit Fig. 17 der konstruktive Aufbau der Mischverteilereinrichtung 44, insbesondere der Eingangsscheibe 16 und des Stellgliedes 17, vorgestellt.

Fig. 1 zeigt die Eingangsscheibe 16 in perspektivischer Ansicht. Die Eingangsscheibe 16 erstreckt sich um ihre Mittellängsachse 42 im Wesentlichen kreisscheibenförmig herum.

Sie umfasst auf ihrer Eingangsseite 47 gemäß Fig. 2 acht eingangsseitige Anschlüsse 18a, 18b, 18c, 18d, 18e, 18f, 18g, 18h. Fig. 2 deutet für den eingangsseitigen Anschluss 18h lediglich schematisch gestrichelt einen Stutzen 40 an. Dieser Stutzen wird als Eingangsstutzen bezeichnet und dient zum Anschluss einer Fluidleitung, insbesondere eines Schlauches. Alle eingangsseitigen Anschlüsse 18a, 18b, 18c, 18d, 18e, 18f, 18g, 18h können über entsprechende, in Fig. 2 nicht dargestellte Anschlussstutzen und entsprechende Fluidleitungen 14a, 14b, 14c mit Behältnissen 11a, 11b, 11c verbunden werden. Die Stutzen können hierzu in sacklochartige Bohrungen auf der Eingangsscheibe 16 eingesetzt werden.

Die eingangsseitigen Anschlüsse 18a, 18b, 18c, 18d, 18e, 18f, 18g, 18h erstrecken sich gemäß Fig. 1 bis zur Ausgangsseite 48 der Eingangsscheibe 16. Man erkennt in Fig. 1, dass der eingangsseitige Anschluss 18h in eine offene Spülmittelnut 53 mündet. Der Mündungsbereich bildet einen Eingangsanschluss 28 aus, der Spülmedium führt.

Die Spülmediumnut 53 weist eine Bodenfläche 54 auf.

Gegenüber dieser Bodenfläche 54 springen insgesamt sieben inselförmige, im Querschnitt etwa trapezförmige Vorsprünge vor.

Im Zentrum eines jeden Vorsprunges befindet sich eine Mündungsöffnung 30a, 30b, 30c, 30d, 30e, 30f, 30g eines Eingangsanschlusses, der als Produktmedium-führender Anschluss ausgebildet ist.

Ein Produktmedium stellt im Sinne der vorliegenden Patentanmeldung eine Chemikalie oder ein Reinigungsmittel oder einen Bestandteil dieser dar, die bei einem Wasch- und Reinigungsprozess einer Waschmaschine oder Spülmaschine oder eines anderen Zielgerätes verwendet wird. Von einem Produktmedium unterscheidet sich Spülmedium. Dabei kann es sich zum Beispiel um Wasser handeln oder ein anderes geeignetes Medium, mit dem Fluidwege gespült werden können.

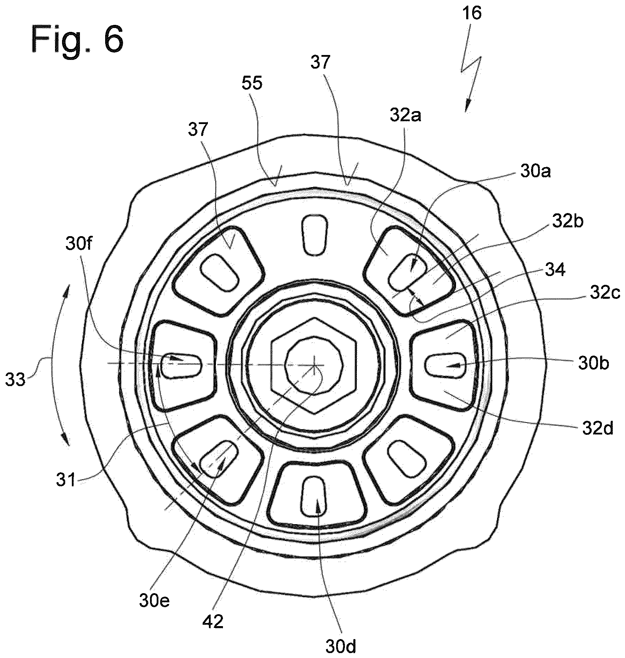

Die Mündungsöffnungen 30a, 30b, 30c, 30d, 30e, 30f, 30g sind ausweislich gemäß Fig. 6 äquidistant voneinander beabstandet. Demnach ist zwischen jeweils zwei Mündungsöffnungen (zum Beispiel zwischen den Mündungsöffnungen 30e und 30f gemäß Fig. 6) jeweils ein konstanter Distanzwinkel 31 angeordnet. Dieser ist gemäß dem Ausführungsbeispiel zum Beispiel etwa 45° groß, kann aber auch eine andere Größe aufweisen.

Die Mündungsöffnungen 30a, 30b, 30c, 30d, 30e, 30f, 30h sind jeweils beidseitig in Umfangsrichtung 33 (Fig. 6) von Werkstoffbereichen 32a, 32b benachbart.

Ausweislich Fig. 6 weist ein Werkstoffbereich 32c etwa eine Breite 34 auf.

Die Werkstoffbereiche 32a, 32b stellen, was später noch erläutert wird, Sperrflächen 29a, 29b bereit, mit denen die Durchgangskanäle 19a, 19b verschlossen werden können.

Die Werkstoffbereiche 32a, 32b stellen gemeinsam mit der Ringfläche 55 eine Kontaktfläche 37 der Eingangsscheibe 16 bereit.

Das Stellglied 17 ist bei dem Ausführungsbeispiel ebenfalls im Wesentlichen scheibenförmig ausgebildet. Die Figuren 3 und 4 zeigen das Stellglied 17 in Alleindarstellung.

Das Stellglied 17 weist ebenfalls eine Eingangsseite 49 und eine Ausgangsseite 50 auf. Bei den Ausführungsbeispielen der Figuren 3 und 4 ist das Stellglied 17 von einem Zahnrad 51 umgeben.

Der zuvor erwähnte Antrieb 36 (vgl. Fig. 17) kann zum Beispiel ein Ritzel aufweisen und das Zahnrad 51 zur Erzielung einer Drehverlagerung des Stellgliedes 17 ansprechen.

Das Stellglied 17 und die Eingangsscheibe 16 sind im montierten Zustand konzentrisch zueinander angeordnet. Fig. 3 deutet hierfür einen Achsaufbau 52 an. Für Details hierzu und zur Vermeidung von Wiederholungen wird ebenfalls auf die eingangs erwähnten Patentanmeldungen der Anmelderin verwiesen.

Im montierten Zustand ist die Eingangsseite 49 des Stellgliedes 17 auf die Ausgangsseite 48 der Eingangsscheibe 16 hin gespannt. Vorteilhafterweise sind die Scheiben 16, 17 einander kontaktierend, aber einen Freigang erlaubend, angeordnet.

Die Eingangsseite 49 des Stellgliedes 17 stellt eine Gegenkontaktfläche 39 bereit, die an der Kontaktfläche 37 der Eingangsscheibe 16 im montierten Zustand anliegt.

Die beiden Flächen 37, 39 sorgen für eine Abdichtung gegenüber dem Außenraum.

Fig. 3 zeigt, dass das Stellglied 17 einen ersten Durchgangskanal 19a und einen zweiten Durchgangskanal 19b aufweist. Der Durchgangskanal 19a, 19b weist jeweils eine lichte Weite 35 auf. Vorteilhafterweise sind sämtliche Durchgangskanäle 19a, 19b mit einer gleichen lichten Weite 35 ausgestattet.

Angemerkt sei, dass die zuvor beschriebene Breite 34 des Werkstoffbereiches 32a, der die Sperrfläche 29 ausstellt, zumindest geringfügig größer ist als die lichte Weite 35 des Durchgangskanals 19a.

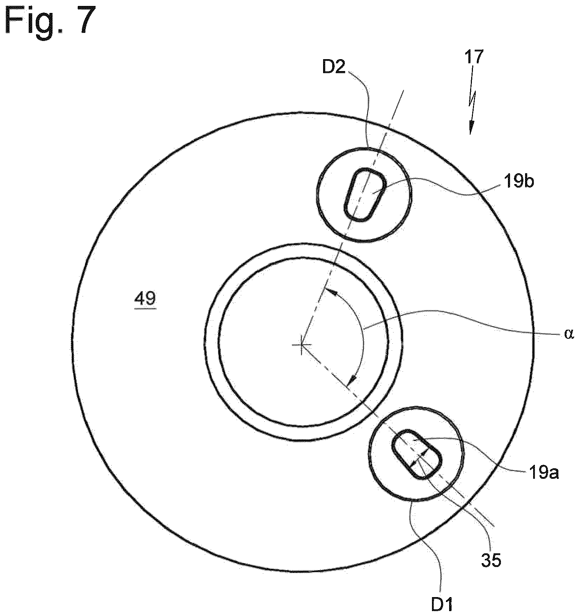

Fig. 7 zeigt in einer Frontalansicht die Eingangsseite 49 des Stellgliedes 17, und veranschaulicht dass die beiden Durchgangskanäle 19a, 19b unter einem Winkel α von etwa 112,5° zueinander angeordnet sein können.

Auch andere Winkel sind zulässig.

Die Figuren 3 bis 5 machen deutlich, dass jedem Durchgangskanal 19a, 19b ein eigener Ausgangsstutzen 49a, 49b zugeordnet ist. Jeder Durchgangskanal 19a, 19b ist, wie Fig. 17 zeigt, über eine entsprechende Fluidleitung 14d, 14e mit dem entsprechenden Zielgerät 12a, 12b verbunden.

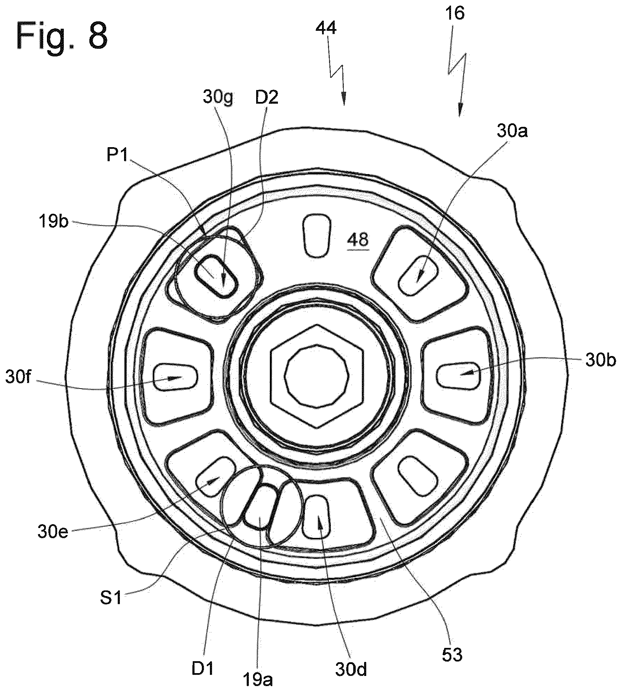

Fig. 7 zeigt die Eingangsseite 49 des Stellgliedes 17 in Ansicht. Fig. 8 zeigt eine Ansicht der Ausgangsseite 48 der Eingangsscheibe 17 zusammen mit einer Projektion der Position der Durchgangskanäle des Stellgliedes 17.

Dieses Bild ergibt sich, wenn auf die Ausgangsseite 48 der Eingangsscheibe 16 in einer Darstellung gemäß Fig. 6 die Eingangsseite 49 des Stellgliedes 17 der Fig. 7 aufgelegt wird. Anders ausgedrückt wird das Stellglied 17 auf die Eingangsscheibe 16 gesetzt, so dass sich die Flächen 37 und 39 kontaktieren.

Fig. 8 verdeutlicht dabei, in Bezug zu der Eingangsscheibe 16, die Position der beiden Durchgangskanäle 19a, 19b zur Veranschaulichung der Drehposition des Stellgliedes 17. Die Positionen der beiden Durchgangskanäle 19a, 19b werden anhand der beiden Kreise D1 und D2 in Fig. 8 bezeichnet.

Im Zentrum des Positionskreises D1 befindet sich der erste Durchgangskanal 19a; im Zentrum des Positionskreises D2 befindet sich der zweite Durchgangskanal 19b.

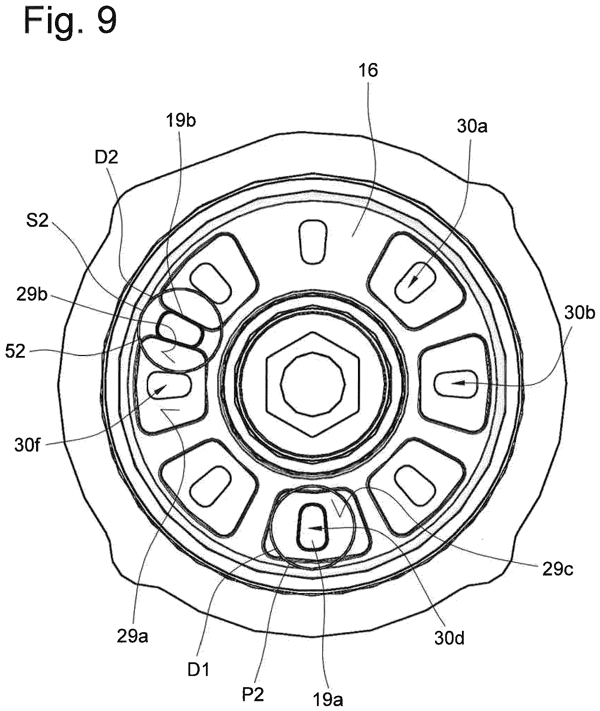

In den nachfolgenden Figuren 9 bis 11 sind jeweils die Positionen des Durchgangskanals 19a, 19b in unterschiedlichen Drehumfangspositionen des Stellgliedes 17 dargestellt.

Gemäß Fig. 8 nimmt der zweite Durchgangskanal 19b eine erste Produktposition P1 ein. Der Durchgangskanal 19b befindet sich in Überdeckung mit der entsprechenden Mündungsöffnung 30g. Der zweite Durchgangskanal 19b findet also in der Position des Stellgliedes 17 gemäß Fig. 8 eine kommunikative Verbindung mit dem eingangsseitigen Anschluss 18g ein.

Der erste Durchgangskanal 19a nimmt gemäß Fig. 8 eine erste Spülposition S1 ein. Der erste Durchgangskanal 19a befindet sich gemäß Fig. 8 exakt mittig zwischen zwei Mündungsöffnungen 30d und 30e. Der erste Durchgangskanal 19a befindet sich also in kommunikativer Verbindung mit der Spülmediumnut 53. Er befindet sich damit In einer Spülposition S1, in der die dem ersten Durchgangskanal 19a zugeordnete erste Pumpe 21a Spülmedium fördern könnte, wenn die Pumpe 21a betrieben wird.

In dieser Position gemäß Fig. 8 kann die dem zweiten Durchgangskanal 19b zugeordnete Pumpe 21b angesprochen werden und das an der Mündungsöffnung 30fg anstehende Medium fördern.

Bei einem Ansprechen der zweiten Pumpe 21b steht der Durchgangskanal 19b nicht in kommunikativer Verbindung mit dem Durchgangskanal 19a. Dies wird anhand der Position des Stellgliedes 17 gemäß Fig. 8 deutlich:
Der zweite Durchgangskanal 19b kommuniziert nur mit der Mündungsöffnung 30g.

Hiervon getrennt ist der erste Durchgangskanal 19a, der nur mit der Spülmediumnut 53 kommuniziert.

Infolge der Kontaktierung von Kontaktfläche 37 der Eingangsscheibe 16 und der Gegenkontaktfläche 39 an der Eingangsseite 49 des Stellgliedes 17 ist die Mündungsöffnung des Durchgangskanals 19b gegenüber der Mündungsöffnung 30g abgedichtet.

Für den Fall, dass die erste Pumpe 21a angesprochen wird, die dem Durchgangskanal 19a zugeordnet ist, kann die Pumpe 21a aufgrund des in einer Spülposition S1 befindlichen Durchgangskanals 19a Spülmedium fördern und den ersten Durchgangskanal 19a spülen.

Fig. 9 zeigt eine gegenüber Fig. 8 geänderte Drehposition des Stellgliedes 17 relativ zur Eingangsscheibe 16. Hier ist das Stellglied 17 ausgehend von der Position gemäß Fig. 8 um einen Winkel von etwa 22,5° gegen den Uhrzeigersinn gedreht worden.

Der zweite Durchgangskanal 19b nimmt hier eine Spülposition S2 ein.

Der erste Durchgangskanal 19a ist hingegen in kommunikative Verbindung mit der Mündungsöffnung 30d gebracht worden und befindet sich in einer zweiten Produktposition P2.

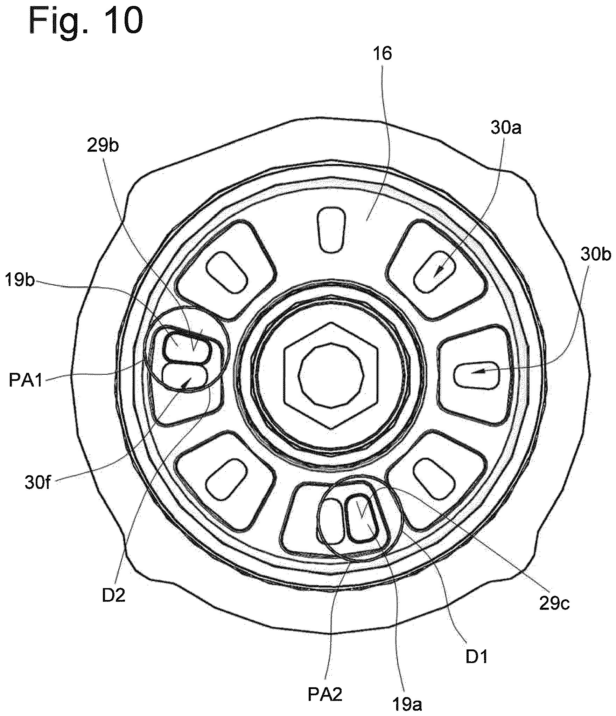

Fig. 10 zeigt eine geänderte, dritte Relativposition des Stellgliedes 17 relativ zur Eingangsscheibe 16.

Hier befinden sich der erste Durchgangskanal 19a und der zweite Durchgangskanal 19b jeweils in einer Parkposition PA1, PA2. Beide Durchgangskanäle 19a, 19b sitzen in dieser Position des Stellgliedes jeweils auf einer Sperrfläche 29b, 29c auf, die von einem Werkstoffbereich 32a, 32b der Eingangsscheibe 16 bereitgestellt ist. In dieser Position sind beide Durchgangskanäle 19a, 19b von der jeweiligen Sperrfläche verschlossen.

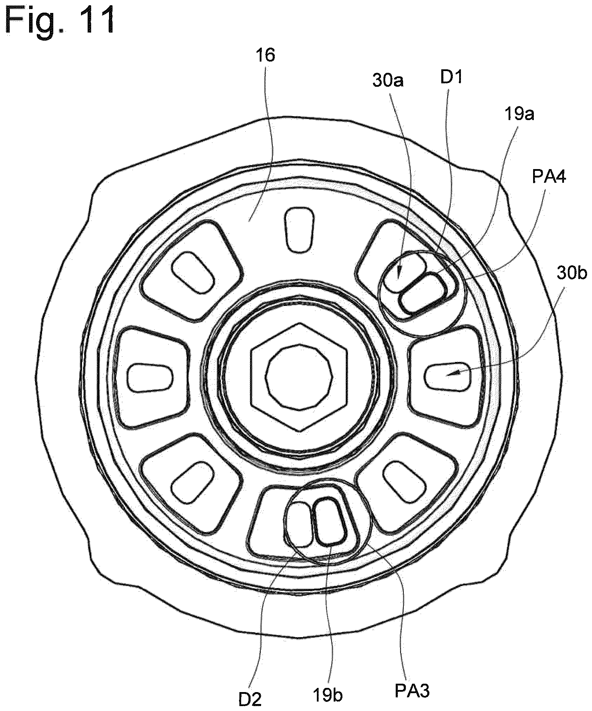

Fig. 11 zeigt eine weitere Position des Stellgliedes 17 relativ zur Eingangsscheibe 16. Hier befindet sich der erste Durchgangskanal 19a in einer Parkposition PA4 und der zweite Durchgangskanal 19b in einer Parkposition PA3.

Bei dem Ausführungsbeispiel der Figuren 8 bis 11 ist gewährleistet, dass immer dann, wenn einer beiden Durchgangskanäle 19b auf einer Produktposition P1 steht, der jeweils andere Durchgangskanal 19a immer auf einer Spülposition S1 steht. Dies ergibt sich zum Beispiel aus den Figuren 8 und 9.

Andererseits wird bei diesem Ausführungsbeispiel deutlich, dass dann, wenn einer der beiden Durchgangskanäle 19a sich in einer Parkposition PA2 befindet, sich der jeweils andere Durchgangskanal 19b ebenfalls in einer Parkposition PA1 befindet.

Damit wird durch die Geometrie und die Positionierung der Durchgangskanäle 19a, 19b in dem Stellglied 17 und durch die Geometrie und Positionierung der Mündungsöffnungen 30a, 30b, 30c, 30d, 30e, 30f, 30g an der Eingangsscheibe 16 gewährleistet, dass die geschalteten Fluidkommunikationswege immer voneinander separiert sind.

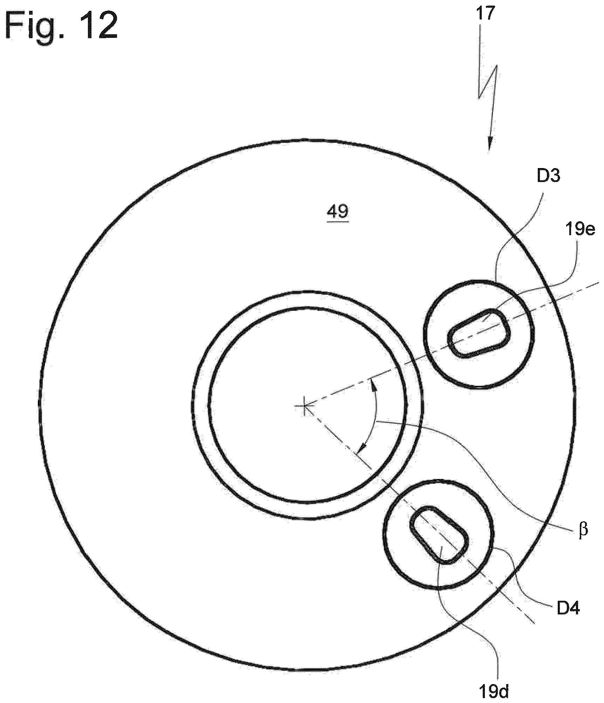

Dieser Grundsatz gilt auch für das nachfolgend beschriebene weitere Ausführungsbeispiel der Figuren 12 bis 16.

Fig. 12 zeigt ein anderes Ausführungsbeispiel eines Stellgliedes 17, wobei wiederum die Eingangsseite 49 dargestellt ist.

Das Ausführungsbeispiel der Fig. 12 zeigt wiederum einen ersten Durchgangskanal 19d und einen zweiten Durchgangskanal 19e. Hier ist ein anderer Winkel β zwischen den beiden Durchgangskanälen vorgesehen als bei dem zuvor beschriebenen Ausführungsbeispiel. Gemäß Fig. 12 beträgt der Winkel β etwa 66°.

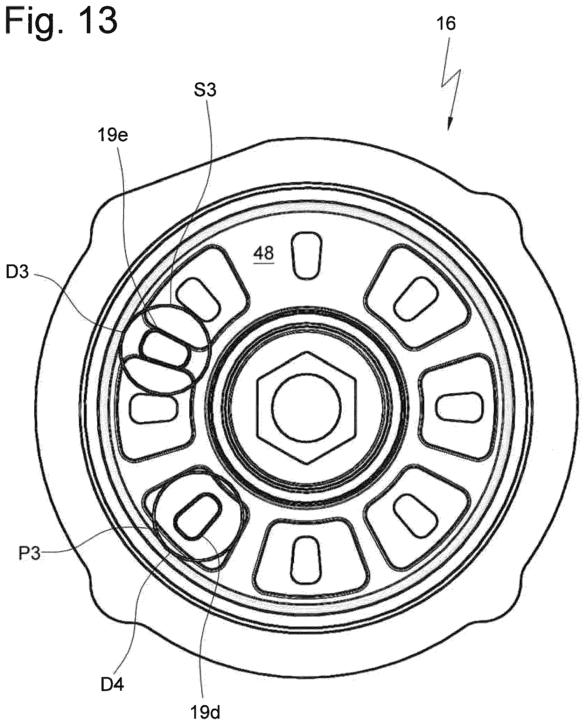

Fig. 13 zeigt, vergleichbar der Darstellung der Fig. 8, die Eingangsscheibe 16 bei Betrachtung der Ausgangsseite 48, unter Darstellung der Positionen der beiden Durchgangskanäle 19d, 19e des Stellgliedes 17 der Fig. 12 in einer ersten Drehposition des Stellgliedes 17 relativ zur Eingangsscheibe 16.

In Fig. 13 ist die Position des Durchgangskanals 19e mit D3 bezeichnet und die Position des Durchgangskanals 19d mit D4 bezeichnet.

Gemäß Fig. 13 befindet sich der Durchgangskanal 19e in einer Spülposition S3.

Der Durchgangskanal 19d befindet sich in einer Produktposition P3.

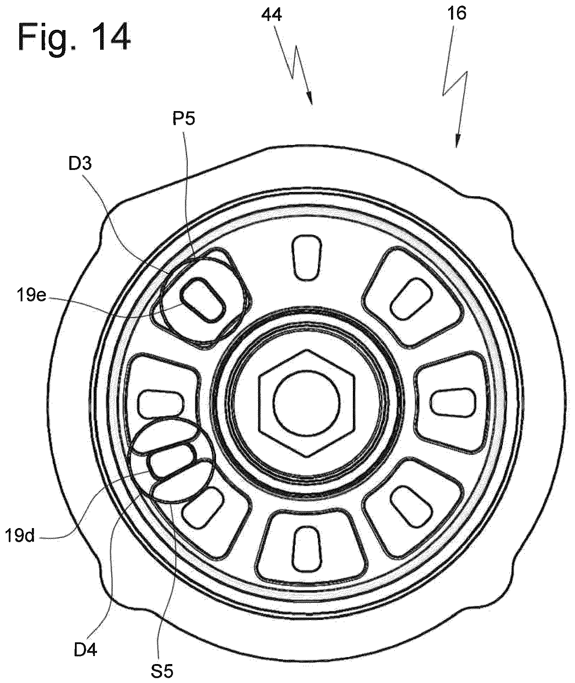

Ausgehend von der Darstellung der Fig. 13 zeigt Fig. 14 ein Stellglied 17 mit einer relativ zur Eingangsscheibe 16 geänderten Position, wobei das Stellglied 17 relativ zur Eingangsscheibe 16 etwa um einen Winkel von 22,5° im Uhrzeigersinn verdreht ist.

Der Durchgangskanal 19e befindet sich hier in einer Produktposition P5, und der Durchgangskanal 19d befindet sich hier in einer Spülposition S5.

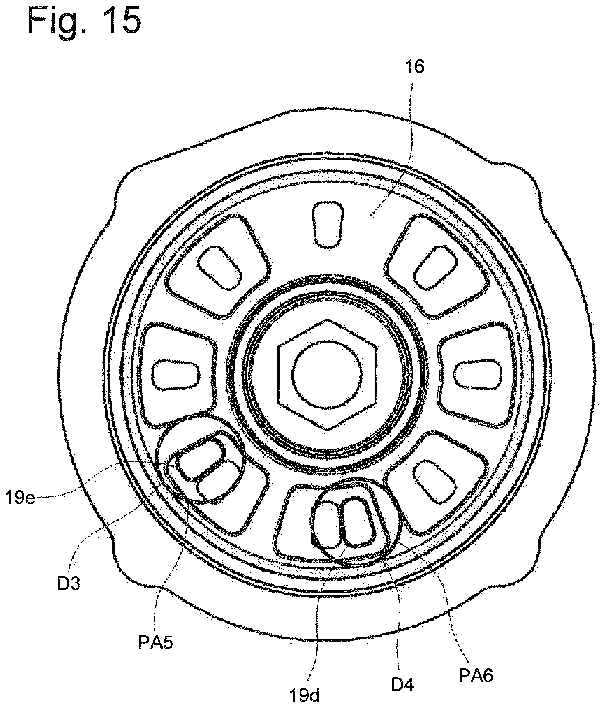

Fig. 15 zeigt das Ausführungsbeispiel der Fig. 13, bei dem das Stellglied 17 relativ zu der Eingangsscheibe 16 ausgehend von Fig. 13 etwa um 56° entgegen dem Uhrzeigersinn verdreht worden ist.

Gemäß Fig. 15 befindet sich das Stellglied 17 in einer Position, in der der Durchgangskanal 19e eine Parkposition PA5 einnimmt, und der Durchgangskanal 19d eine Parkposition PA6 einnimmt.

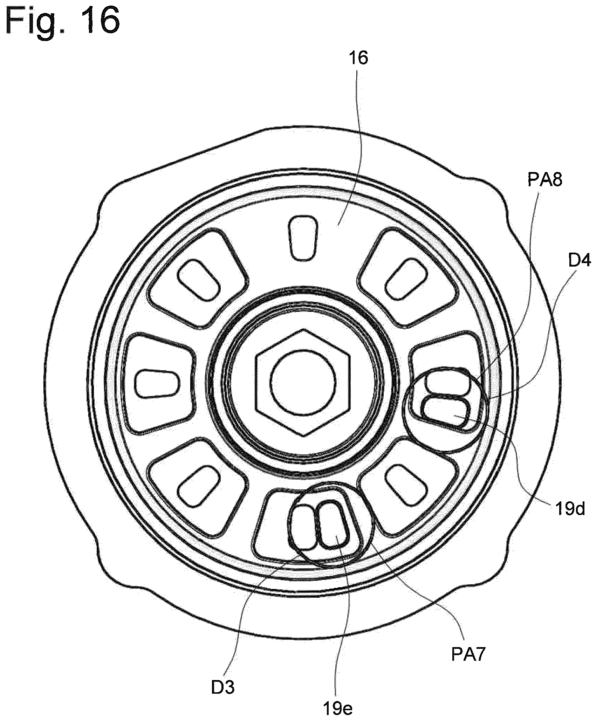

Fig. 16 zeigt eine weitere Relativposition des Stellgliedes 17 relativ zur Eingangsscheibe 16 desselben Ausführungsbeispiels: Hier ist ausgehend von der Darstellung der Fig. 15 das Stellglied weiter entgegen dem Uhrzeigersinn relativ zu der Eingangsscheibe 16 gedreht worden.

Gemäß Fig. 16 nimmt der Durchgangskanal 19e eine Parkposition PA7 und der Durchgangskanal 19d eine Parkposition PA8 ein.

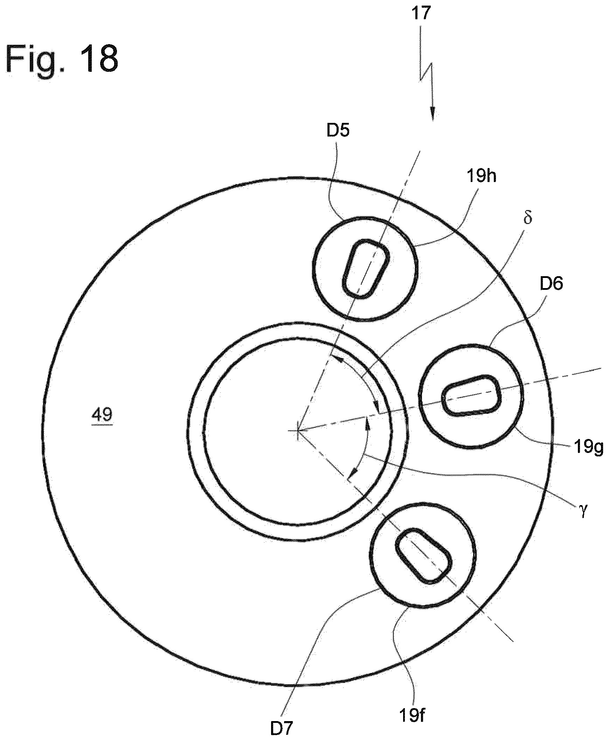

Ein weiteres Ausführungsbeispiel, bei dem in dem Stellglied 17 - bei unveränderter Eingangsscheibe 16 - drei Durchgangskanäle 19f, 19g, 19h angeordnet sind, zeigen die Figuren 18 bis 21.

Ausweislich Fig. 18 - einer Darstellung eines Stellgliedes 17 analog zu der Darstellung der Fig. 7 - sind die Durchgangskanäle 19g, 19f unter einem Winkel γ voneinander beabstandet, und die Durchgangskanäle 19h, 19g sind unter einem Winkel δ voneinander beabstandet.

Bei dem Ausführungsbeispiel der Fig. 18 sind die Winkel γ und δ gleich und betragen jeweils 60°. Auch andere Winkel sind möglich.

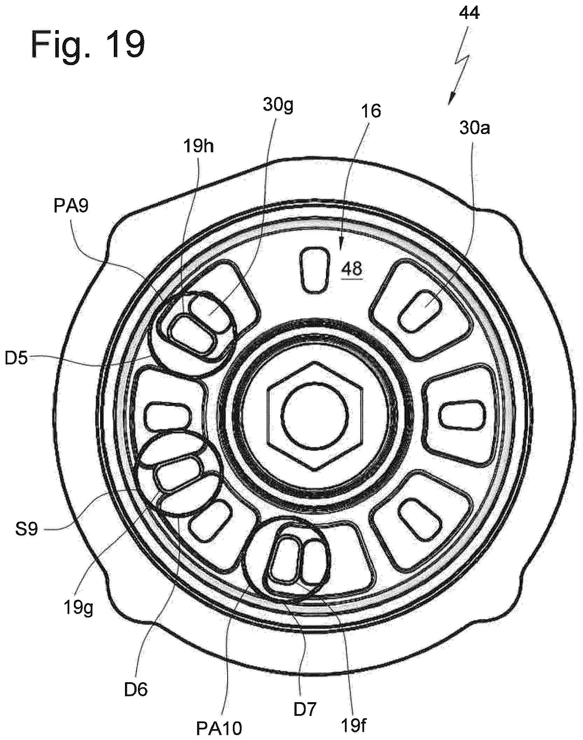

Fig. 19 zeigt in einer Darstellung analog zur Darstellung der Fig. 8 die unverändert belassene Eingangsscheibe 16 und zusätzlich die Position D5 des Durchgangskanals 19h, die Position D6 des Durchgangskanals 19g, und die Position D7 des Durchgangskanals 19f des Stellgliedes 17.

In der Position des Stellgliedes 17 relativ zur Eingangsscheibe 16 gemäß Fig. 19 nimmt der Durchgangskanal 19h eine Parkposition PA9 ein, der Durchgangskanal 19g nimmt eine Spülposition S9 ein, und der Durchgangskanal 19f nimmt eine Parkposition PA10 ein.

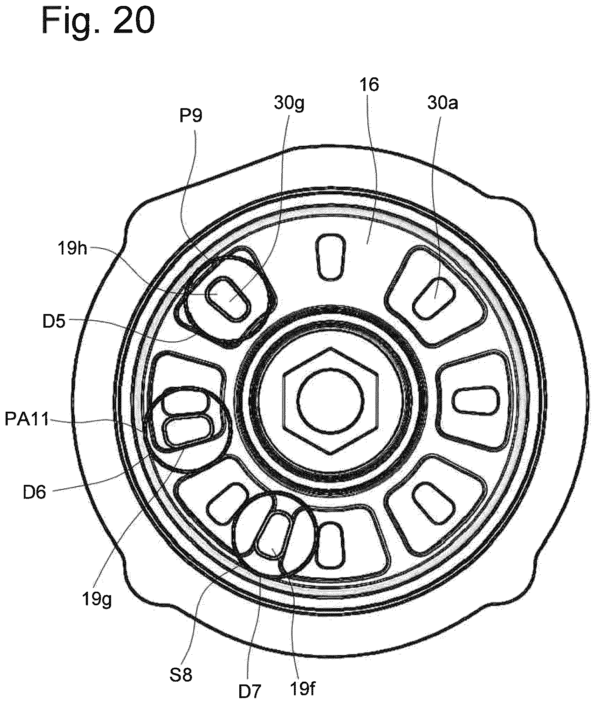

Fig. 20 zeigt das Ausführungsbeispiel der Fig. 19, bei dem das Stellglied 17 relativ zur Eingangsscheibe 16 gegenüber der Position der Fig. 19 um nur wenige Grad im Uhrzeigersinn gedreht worden ist.

Gemäß der Position des Stellgliedes 17 gemäß Fig. 20 nimmt der Durchgangskanal 19h eine Produktposition P9 ein, der Durchgangskanal 19g nimmt eine Parkposition PA11 ein, und der Durchgangskanal 19f nimmt eine Spülposition S8 ein.

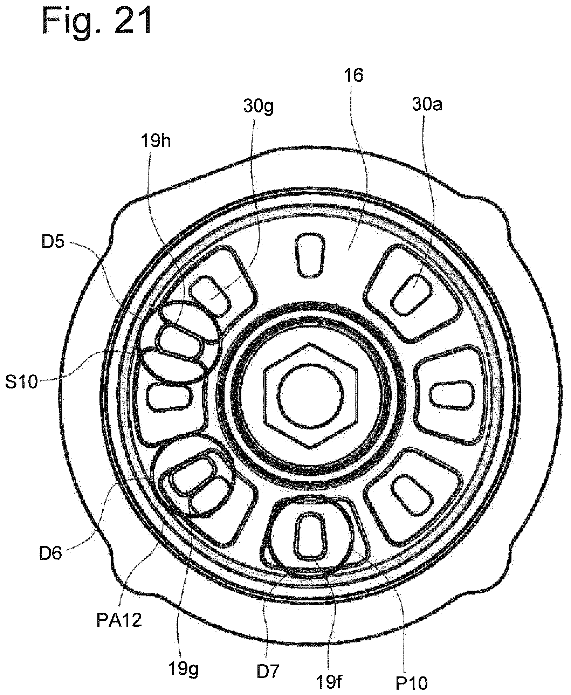

Fig. 21 zeigt das Ausführungsbeispiel der Fig. 19, wobei das Stellglied 17 relativ zur Eingangsscheibe 16 um wenige Grad entgegen dem Uhrzeigersinn gedreht worden ist.

Gemäß Fig. 21 nimmt der Durchgangskanal 19h eine Spülposition S10 ein, der Durchgangskanal 19g nimmt eine Parkposition PA12 ein, und der Durchgangskanal 19f nimmt eine Produktposition P10 ein.

Es ist dabei bemerkenswert, dass immer dann, wenn einer der Durchgangskanäle 19f, 19g, 19h eine Produktposition P9 oder P10 einnimmt, jeweils einer der beiden übrigen Kanäle eine Parkposition PA10, PA11 und der jeweils andere der beiden Durchgangskanäle eine Spülposition S10, S9, S8 einnimmt.

Weiter ist bei diesem Ausführungsbeispiel bemerkenswert, dass die Abstände der Durchgangskanäle 19f, 19g, 19h, deren Positionierung und die Geometrie und Positionierung der Mündungsöffnungen 30a, 30b, 30c, 30d, 30e, 30f so getroffen ist, dass, wenn einer der Durchgangskanäle 19f, 19g, 19h eine Spülposition einnimmt (zum Beispiel die Spülposition S9, S8 oder S10), keiner der beiden übrigen Durchgangskanäle eine Spülposition einnimmt, sondern stattdessen entweder beiden übrigen Durchgangskanäle jeweils eine Parkposition einnehmen (vgl. die Darstellung der Fig. 19) oder jeweils einer der beiden übrigen Durchgangskanäle eine Produktposition einnimmt und jeweils der andere der beiden übrigen Durchgangskanäle eine Parkposition einnimmt (vgl. Figuren 20 und 21).

Damit wird eine sichere Trennung der Kommunikationswege in jeder geschalteten Position des Stellgliedes 17 relativ zur Eingangsscheibe 16 gewährleistet.

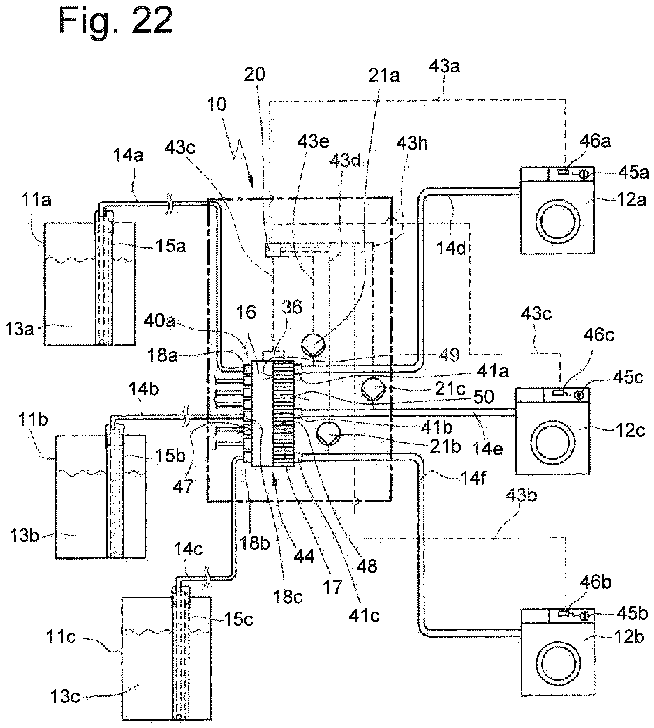

Das Ausführungsbeispiel der Fig. 22 zeigt eine Dosiereinrichtung 10 in einer Darstellung analog zu der Darstellung der Fig. 17.

Bei dem Ausführungsbeispiel der Fig. 22 sind ausgangsseitig drei Zielgeräte 12a, 12b, 12c angeschlossen. Demzufolge weist die Mischverteileinrichtung 44 drei Ausgangsstutzen 41a, 41b, 41c auf.

Das Ausführungsbeispiel der Fig. 22 kann ein Stellglied 17 mit drei Durchgangskanälen 19g, 19f, 19h aufweisen, wie es in den Figuren 18 bis 21 dargestellt ist.

Fig. 22 verdeutlicht, dass jedem der drei Durchgangskanäle 19f, 19g, 19h bzw. Ausgangsstutzen 41a, 41b, 41c jeweils eine eigene Pumpe 21a, 21b, 21c zugeordnet ist. Jede der Pumpen 21a, 21b, 21c ist über eigene Verbindungsleistung 43d, 43e, 43h an die Steuerung 20 der Dosiereinrichtung 10 angeschlossen.

Eingangsseitig können an die Dosiereinrichtung 10 wiederum acht verschiedene Medien, also insbesondere sieben Produktmedien und ein Spülmedium angeschlossen werden. Die unterschiedlichen Medien 13 können insbesondere sukzessive, unter bestimmten Umständen auch zeitgleich, den mehreren Zielgeräten 12a, 12b, 12c zugeführt werden.

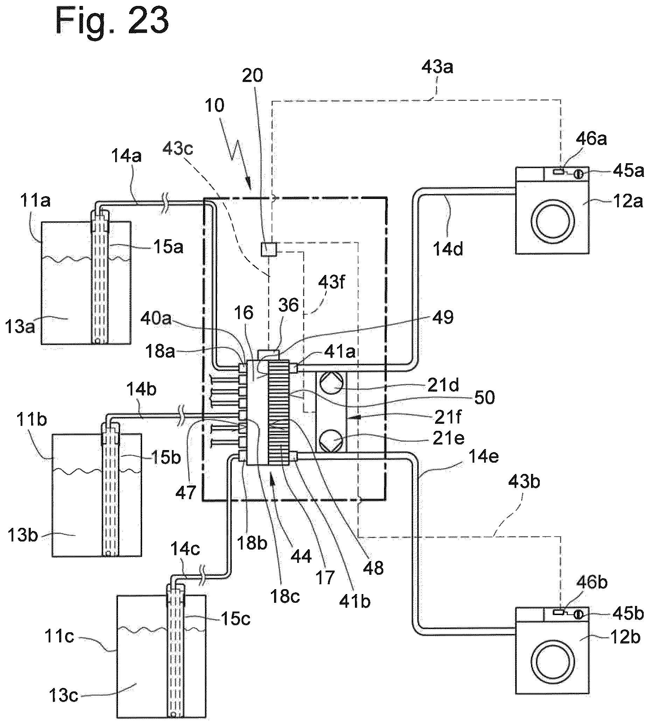

Das Ausführungsbeispiel der Fig. 23 kommt dem Ausführungsbeispiel der Fig. 22 nahe: Hier sind ausgangsseitig an die Dosiereinrichtung 10 nur zwei Zielgeräte 12a, 12b angeschlossen.

Wiederum ist jedem der beiden Durchgangskanäle 19a, 19b bzw. jedem der beiden Stutzen 41a, 41b am Ausgang des Stellgliedes 17 jeweils eine Pumpe 21d, 21e zuordnet.

Hier sind die beiden Pumpen 21d, 21e aber zu einer Pumpeneinheit 21f zusammengefasst. Diese ist zentral über eine einzige Signal- und Verbindungsleitung 43f mit der Steuerung 20 der Dosiereinrichtung 10 verbunden.

Die Pumpeneinheit 21 kann beispielweise eine Schlauchpumpe sein, die nur einen motorischen Antrieb, gegebenenfalls auch nur einen Rotor aufweist. Hier kann beispielsweise vorgesehen sein, dass durch eine Rotation des Motors in einer ersten Richtung nur die Fluidleitung 14d im Sinne einer Förderung angesprochen wird, und bei einer Betätigung des Pumpenmotors im entgegengesetzten Drehsinne nur die Förderleitung 14e.

Eine solche Pumpeneinheit 21f kann also zwei Teilpumpen 21d, 21e oder auch mehr, insbesondere auch drei Teilpumpen 21d, 21e umfassen.

Die Teilpumpen 21a, 21b können über ein Getriebe mit einem motorischen Antrieb der Pumpeneinheit 21f gekoppelt sein.

Entscheidend ist, dass jeweils ein selektierbares Wirksamwerden der Pumpeneinheit 21f in Bezug zu unterschiedlichen Fluidleitungen 14d, 14e von der Pumpeneinheit 21f erreichbar ist, so dass die Pumpeneinheit 21f die Funktionsweise mehrerer einzelner Pumpen 21d, 21e erfüllen kann.

Sämtlichen Ausführungsbeispielen der erfindungsgemäßen Dosiereinrichtung und sämtlichen Ausführungsbeispielen der erfindungsgemäßen Verfahren ist gemein, dass vorteilhaft vorgesehen ist, dass jedes Mal, nachdem eine der Pumpen 21a, 21b, 21c, 21d, 21e, 21f, 21g ein Produktmedium durch einen Durchgangskanal 19a, 19b, 19c, 19d, 19e, 19f gefördert hat, dieser Durchgangskanal nachfolgend mit Spülmedium gespült wird. Die Steuerung 20 der Dosiereinrichtung sorgt also dafür, dass nach jeder Förderung eines Produktmediums durch einen Durchgangskanal 19a dieser Durchgangskanal 19a nachfolgend in eine Spülposition verfahren wird, und die dem Spülkanal zugeordnete Pumpe angesprochen wird, um Spülmittel zu fördern. Durch das Spülen der Leitungswege wird verhindert, dass verschiedene Produkte, die miteinander nicht in Verbindung geraten dürfen, in Verbindung geraten.

Die Steuerung 20 der Dosiereinrichtung 10 steuert das Stellglied 17 zum Beispiel derartig an, dass jedes Mal dann, wenn ein Durchgangskanal, zum Beispiel der Durchgangskanal 19a, eine Produktposition, zum Beispiel P1, erreicht und die dem Durchgangskanal 19a zugehörige Pumpe 21a ein Produktmedium gefördert hat, nach Abschluss der Förderung dieses Mediums oder jedenfalls bevor durch diesen Durchgangskanal 19a ein anderes Produktmedium gefördert wird, dieser Durchgangskanal 19a eine Spülposition, zum Beispiel S1 anfährt, und die Pumpe 21a dann angesprochen wird, um Spülmedium zu fördern.

Bei sämtlichen Ausführungsbeispielen der erfindungsgemäßen Dosiereinrichtung 10 kann vorgesehen sein, dass das Stellglied 17 relativ zur Eingangsscheibe 16 nur drehumfangsbegrenzt drehbar ist. Beispielsweise kann ein maximaler zulässiger Verdrehwinkel von Stellglied 17 relativ zur Eingangsscheibe 16 von 355°vorgesehen sein. Dieser Drehanschlag kann durch mechanische Elemente, aber auch über eine elektronische Steuerung erreicht werden. Angemerkt sei, dass die Drehposition des Stellgliedes 17 relativ zu der Eingangsscheibe 16 zum Beispiel mit einem Drehwinkelsensor erfasst werden kann. Unter Zuhilfenahme dieses Drehwinkelsensors oder eines anderen Positionssensors kann die Steuerung 20 auch eine Information darüber erhalten, ob das Stellglied 17 eine bestimmte Produktposition (zum Beispiel P1) oder eine bestimmte Parkposition (zum Beispiel PA1) oder eine bestimmte Spülposition (zum Beispiel S1) eingenommen hat. Erst wenn eine Bestätigung darüber vorliegt, dass eine bestimmte Produktposition oder Spülposition eines bestimmten Durchgangskanals 19a erreicht ist, kann die Steuerung 20 die an den Durchgangskanal 19a angeschlossene Pumpe 21a freigeben und im Sinne einer Mediumförderung ansprechen.

Bei der erfindungsgemäßen Dosiereinrichtung 10 kann vorgesehen sein, dass einer der mehreren Durchgangskanäle 19a, 19b, nicht sämtliche, von der Eingangsscheibe 16 bereitgestellte Produktpositionen P1, P2, P3, P4, P5, P6, P7, P8, P9, P10, P11 anfahren kann, sondern nur einige dieser Produktpositionen.

So kann zum Beispiel bei dem Ausführungsbeispiel der Figuren 8 bis 11 vorgesehen sein, dass jeder der beiden Durchgangskanäle 19a, 19b nur vier Produktpositionen anfahren kann.

Bei dem Ausführungsbeispiel der Figuren 12 bis 16 kann vorgesehen sein, dass jeder der beiden Durchgangskanäle 19d, 19e jeweils genau drei Produktpositionen anfahren kann.

Bei dem Ausführungsbeispiel der Figuren 18 bis 21 kann vorgesehen sein, dass jeder der beiden äußeren Durchgangskanäle 19h, 19f jeweils fünf Produktpositionen anfahren kann.

Die Wahl der Zahl der anfahrbaren Produktpositionen P1, P2 hängt von dem Belieben des Fachmanns ab.

Bei den Ausführungsbeispielen der Figuren 1 bis 17 und 23, bei denen das Stellglied 17 jeweils zwei Durchgangskanäle aufweist, kann vorgesehen sein, dass neben einem Spülmedium eingangsseitig an die Dosiereinrichtung bis zu sieben unterschiedliche Produktmedien angeschlossen werden. Dann können zum Beispiel die Produktmedien P1, P2, P3, P4 über den ersten Durchgangskanal 19a nur dem ersten Zielgerät 12a und die Produktmedien P5, P6, P7 über den zweiten Durchgangskanal 19b nur dem zweiten Zielgerät 12b zugeführt werden.

Von der Erfindung ist aber auch umfasst, wenn eingangsseitig der Dosiereinrichtung 10 zum Beispiel nur vier unterschiedliche Produktmedien angeschlossen werden, so dass an sechs der sieben eingangsseitigen Anschlüsse 18a, 18b, 18c, 18d, 18e, 18f, 18g nur drei unterschiedliche Produktmedien angeschlossen werden, so dass an jeweils zwei dieser eingangsseitigen Anschlüsse dasselbe Produktmedium angeschlossen ist. Bei einer solchen Aufteilung können zwei angeschlossenen Zielgeräten vier unterschiedliche Produktmedien zugeführt werden.

Bei dem Ausführungsbeispiel der Figuren 18 bis 21 können beispielweise drei unterschiedliche Produktmedien sämtlichen drei angeschlossenen Zielgeräten zugeführt werden.

Wie eine Versorgung der Zielgeräte mit welchen Chemikalien durchgeführt wird, ist vom Fachmann bestimmbar.

Wesentlich für den Betrieb der Dosiereinrichtung 10 ist, dass die Steuerung 20 der Dosiereinrichtung 10 weiß, welches Produktmedium 13a, 13b an welchem der eingangsseitigen Anschlüsse 18a, 18b, 18c, 18d, 18e, 18f, 18g, 18h anliegt. Zur Vermeidung von Wiederholungen wird auf die eingangs erwähnten älteren Patentanmeldungen des Standes der Technik der Anmelderin verwiesen, die Vorrichtungen und Verfahren angeben, die dies leisten.

Bei sämtlichen Ausführungsbeispielen der erfindungsgemäßen Dosiereinrichtung 10 ist die Eingangsscheibe 16 identisch ausgebildet. Bei sämtlichen Ausführungsbeispielen der Eingangsscheibe 16 ist der Eingangsanschluss 18h als Spülmediumanschluss ausgebildet, der auf der Ausgangsseite 48 der Eingangsscheibe 16 in eine einzige Nut 53 für das Spülmedium mündet. Diese Spülmittelnut 53 umgibt, wie am besten in Fig. 1 in Verbindung mit Fig. 8 zeigt, sämtliche inselartigen, durch die Werkstoffbereiche 32a, 32b gebildeten Vorsprünge in Umlaufrichtung.

Diese Geometrie gewährleistet, dass jede Produktposition P1, P2 in Umfangsrichtung 33 beidseitig sowohl von einer Parkposition PA eingefasst ist, und weiter außerhalb, auch von jeweils einer Spülposition S eingefasst ist. Damit werden die Verstellwege des Stellgliedes 17 relativ zur Eingangsscheibe 16, um zu gewährleisten, dass nach einer Förderung eines Produktmediums der gleiche Durchgangskanal 19a eine Förderung eines Spülmediums erreicht, sehr kurz gehalten.

Nicht dargestellte Ausführungsbeispiele der Erfindung sehen auf der Eingangsscheibe 16 an deren Ausgangsseite 48 nicht nur, wie in den Figuren dargestellt, eine einzige Nut 53 für Spülmedium vor, sondern sehen mehrere Kanäle oder Nuten für Spülmedium vor, wobei diese Kanäle voneinander abgegrenzt und gegeneinander abgedichtet sind. Dies ermöglicht einen gleichzeitigen Betrieb mehrerer Pumpen 21a, 21b in einer Position des Stellgliedes 17, in der mehrere Durchgangskanäle 19a, 19b jeweils eine Spülposition S einnehmen. Auch auf diese Weise kann gewährleistet werden, dass der Betrieb einer der Pumpen zur Förderung von Spülmedium in einem der Durchgangskanäle eine zum Beispiel zeitgleiche oder nachfolgende Spülmedium-Förderung in einem anderen Durchgangskanal nicht beeinträchtigt.

Von der Erfindung ist darüber hinaus erfasst, dass Rückschlagventile oder andere Sperreinrichtungen vorgesehen sind, die einen Rückfluss eines Mediums durch einen Durchgangskanal verhindern. Hierzu können zum Beispiel Klappen oder andere Sperrmittel vorgesehen sein.

Bei sämtlichen Ausführungsbeispielen der Erfindung liegen sämtliche Mündungsöffnungen 30a, 30b, 30c, 30d, 30f, 30g, 30h für das Spülmedium und für die Produktmedien auf einem gemeinsamen Radius, bezogen auf die Mittellängsachse 42 der Eingangsscheibe 16.

Gleichermaßen liegen sämtliche Durchgangskanäle 19a, 19b auf demselben Radius, bezogen auf ein Zentrum des Stellgliedes 17.

Bei weiteren, in den Zeichnungen nicht dargestellten Ausführungsbeispielen können unterschiedliche Mündungsöffnungen und/oder unterschiedliche Durchgangskanäle auch auf unterschiedlichen Radien liegen.

Bei zahlreichen Ausführungsbeispielen der erfindungsgemäßen Dosiereinrichtung 10 und bei zahlreichen Ausführungsbeispielen des erfindungsgemäßen Verfahrens ist vorgesehen, dass die Pumpen 21a, 21b nicht gleichzeitig betrieben werden, sondern immer nur sukzessive. Dies erlaubt eine besonders sichere Betriebsweise.

Soll zunächst ein Medium zu einem Zielgerät gefördert werden, spricht die Steuerung das Stellglied 17 an, wobei der Antrieb 36 das Stellglied 17 in die gewünschte Drehposition verbringt, so dass der Durchgangskanal (zum Beispiel 19a) eine Produktposition P (zum Beispiel P1) einnimmt. Dann wird die Pumpe 21a zur Förderung des Produktmedium 13a angesprochen. Nachfolgend wird der Durchgangskanal 19a von der Steuerung 20 über den Antrieb 36 für das Stellglied 17 eine Spülposition verlagert und sodann die Pumpe 21a wiederum angesprochen, um den Durchgangskanal zu spülen.

Erst dann wird der zweite Durchgangskanal 19b in eine Produktposition P (zum Beispiel P2) verlagert, um ein Produktmedium zu fördern.

Von anderen Ausführungsbeispielen der Erfindung ist aber auch umfasst, wenn mehrere Durchgangskanäle 19a, 19b, die separate Kommunikationswege umfassen, gleichzeitig von mehreren Pumpen 21a, 21b beaufschlagt werden.

## Patentansprüche

1. Dosiereinrichtung (10) zur Dosierung und Zuführung von Medien über Fluidleitungen (14a, 14b, 14c, 14e, 14d, 14e, 14f) zu mehreren Zielgeräten (12a, 12b, 12c), insbesondere zu mehreren gewerblichen textilen Waschmaschinen, wobei die Dosiereinrichtung (10) eine Eingangsscheibe (16) mit mehreren eingangsseitigen Anschlüssen (18a, 18b, 18c, 18d, 18e, 18f, 18g, 18h) umfasst, die jeweils mit einem Behältnis (11a, 11b, 11c) verbindbar sind, und ein relativ zu der Eingangsscheibe (16) verlagerbares Stellglied (17), das eine Mehrzahl von Durchgangskanälen (19a, 19b, 19c, 19e, 19f, 19g, 19h) aufweist, wobei jeder Durchgangskanal (19a, 19b, 19c, 19e, 19f, 19g, 19h) mit einem Zielgerät (12a, 12b, 12c) verbindbar ist, wobei infolge einer Verlagerung des Stellgliedes (17) relativ zu der Eingangsscheibe (16) jeweils wenigstens einer der Durchgangskanäle (19a, 19b, 19c, 19e, 19f, 19g, 19h) mit einem der Anschlüsse (18a, 18b, 18c, 18d, 18e, 18f, 18g, 18h) in kommunikative Verbindung bringbar ist, wobei die Dosiereinrichtung (10) mehrere, von einer Steuerung (20) der Dosiereinrichtung (10) ansprechbare Pumpen (21a, 21b, 21c, 21d, 21e) umfasst, die zur Entnahme von Medium (13a, 13b, 13c) aus dem Behältnis (11a, 11b, 11c) und zu dessen Förderung zu dem Zielgerät (12a, 12b, 12c) ausgebildet sind, und wobei jedem Durchgangskanal (19a, 19b, 19c, 19e, 19f, 19g, 19h) eine Pumpe (21a, 21b, 21c, 21d, 21e) zugeordnet ist, die jeweils stromabwärts des Durchgangskanals (19a, 19b, 19c, 19e, 19f, 19g, 19h) angeordnet ist.

2. Dosiereinrichtung (10) nach Anspruch 1, **dadurch gekennzeichnet, dass** von jedem Durchgangskanal (19a, 19b, 19c, 19e, 19f, 19g) wenigstens eine Parkposition (PA1, PA2, PA3, PA4, PA5, PA6, PA7, PA8, PA9, PA10, PA11, PA12) einnehmbar ist, in der er weder mit einem Spülmedium-führenden Eingangsanschluss (28) kommuniziert noch mit einem Produkt-Medium-führenden Eingangsanschluss (27a, 27b, 27c, 27d, 27e, 27f, 27g) kommuniziert.

3. Dosiereinrichtung (10) nach Anspruch 2, **dadurch gekennzeichnet, dass** der eine Parkposition (PA1, PA2, PA3, PA4, PA5, PA6, PA7, PA8, PA9, PA10, PA11, PA12) einnehmende Durchgangskanal (19a, 19b, 19c, 19e, 19f, 19g, 19h) von einer Eingangsscheiben-seitigen Sperrfläche (29a, 29b) verschlossen ist.

4. Dosiereinrichtung (10) nach einem der vorangegangenen Ansprüche, **dadurch gekennzeichnet, dass** eine Anordnung der Durchgangskanäle (19a, 19b, 19c, 19e, 19f, 19g, 19h) relativ zueinander in dem Stellglied (17) und eine Anordnung der eingangsseitigen Anschlüsse (18a, 18b, 18c, 18d, 18e, 18f, 18g, 18h) an der Eingangsscheibe (16) derart getroffen ist, dass in jeder Position des Stellgliedes (17) relativ zu der Eingangsscheibe (16) jeweils nur höchstens ein Durchgangskanal (19a, 19b, 19c, 19e, 19f, 19g, 19h) eine Produktposition (P1, P2, P3, P5, P9, P10) einnimmt, in der er mit einem Produkt-Medium-führenden Eingangsanschluss (27a, 27b, 27c, 27d, 27e, 27f, 27g) kommuniziert.

5. Dosiereinrichtung (10) nach einem der vorangegangenen Ansprüche, **dadurch gekennzeichnet, dass** wenigstens ein eingangsseitiger Anschluss (18h) als Spülmedium-Anschluss (28) ausgebildet ist.

6. Dosiereinrichtung (10) nach einem der vorangegangenen Ansprüche, **dadurch gekennzeichnet, dass** die eingangsseitigen Anschlüsse auf einer Ausgangsseite (48) der Eingangsscheibe (16) angeordnete Mündungsöffnungen (30a, 30b, 30c, 30d, 30e, 30f, 30g) umfassen.

7. Dosiereinrichtung (10) nach Anspruch 6, **dadurch gekennzeichnet, dass** die Mündungsöffnungen (30a, 30b, 30c, 30d, 30e, 30f, 30g) äquidistant voneinander angeordnet sind.

8. Dosiereinrichtung (10) nach Anspruch 6 oder 7, **dadurch gekennzeichnet, dass** die Mündungsöffnungen (30a, 30b, 30c, 30d, 30e, 30f, 30g) jeweils von Werkstoffbereichen (32a, 32b,) der Eingangsscheibe (16) umrandet sind.

9. Dosiereinrichtung (10) nach Anspruch 8, **dadurch gekennzeichnet, dass** die Werkstoffbereiche (32a, 32b) Sperrflächen (29a, 29b) bereitstellen, mit denen jeweils ein Durchgangskanal (19a, 19b, 19c, 19e, 19f, 19g) verschließbar ist.

10. Dosiereinrichtung (10) nach Anspruch 9, **dadurch gekennzeichnet, dass** beidseitig benachbart mehrerer oder sämtlicher Mündungsöffnungen (30a, 30b, 30c, 30d, 30e, 30f, 30g) Sperrflächen (29a, 29b) angeordnet sind.

11. Dosiereinrichtung (10) nach Anspruch 9 oder 10, **dadurch gekennzeichnet, dass** die Werkstoffbereiche (32a, 32b) eine Breite (34) aufweisen, die zumindest geringfügig größer ist als eine lichte Weite (35) einer eingangsscheibenseitigen Mündung eines Durchgangskanals (19a, 19b, 19c, 19e, 19f, 19g).

12. Dosiereinrichtung (10) nach einem der vorangegangenen Ansprüche, **dadurch gekennzeichnet, dass** das Stellglied (17) zwei Durchgangskanäle (19a, 19b) aufweist.

13. Dosiereinrichtung (10) nach Anspruch 12, **dadurch gekennzeichnet, dass** die beiden Durchgangskanäle (19a, 19b) miteinander einen Winkel zwischen 90° und 140° einschließen, insbesondere einen Winkel von 112,5° oder von etwa 112,5°.

14. Dosiereinrichtung (10) nach einem der Ansprüche 1 bis 11, **dadurch gekennzeichnet, dass** eine Anordnung der beiden Durchgangskanäle (19a, 19b) relativ zueinander in dem Stellglied (17) und eine Anordnung der eingangsseitigen Anschlüsse (18a, 18b, 18c, 18d, 18e, 18f, 18g, 18h) an der Eingangsscheibe (16) derart getroffen ist, dass immer dann, wenn einer der beiden Durchgangskanäle (19a, 19b) eine Produktposition (P1) einnimmt, in der er mit einem Produkt-Medium-führenden Eingangsanschluss (27a, 27b, 27c, 27d, 27e, 27f, 27g) kommuniziert, der andere Durchgangskanal (19b) eine Spülposition (S1) einnimmt, in der er mit einem Spülmedium-führenden Eingangsanschluss (28) kommuniziert.

15. Verfahren zum Dosieren und Zuführen von Medien (13a, 13b) über Fluidleitungen (14a, 14b, 14c, 14d, 14e) zu mehreren Zielgeräten (12a, 12b, 12c), insbesondere zu mehreren gewerblichen textilen Waschmaschinen, umfassend die folgenden Schritte:
a) Bereitstellen einer Dosiereinrichtung (10) mit einer Eingangsscheibe (16) mit mehreren eingangsseitigen Anschlüssen (18a, 18b, 18c, 18d, 18e, 18f, 18g, 18h) und mit einem relativ zu der Eingangsscheibe (16) verlagerbaren Stellglied (17), das eine Mehrzahl von Durchgangskanälen (19a, 19b, 19c, 19e, 19f, 19g) aufweist, wobei stromabwärts eines jeden Durchgangskanals eine Pumpe (21a, 21b, 21c) angeordnet ist,
b) Verbinden der eingangsseitigen Anschlüsse (18a, 18b, 18c, 18d, 18e, 18f, 18g, 18h) mit Behältnissen (11a, 11b, 11c), die mit Medien (13a, 13b) gefüllt sind,
c) Verbinden jedes Durchgangskanals (19a, 19b, 19c, 19e, 19f, 19g) mit einem Zielgerät (12a, 12b, 12c),
d) Übermitteln einer Anforderung einer bestimmten Menge eines Mediums (13a) von einem ersten Zielgerät (12a) an eine Steuerung (20) der Dosiereinrichtung (10),
e) Verlagern des Stellgliedes (17) relativ zu der Eingangsscheibe (16) derart, dass der dem ersten Zielgerät (12a) zugeordnete erste Durchgangskanal mit demjenigen Anschluss in kommunikative Verbindung gebracht wird, an dem das angeforderte Medium (13a) ansteht,
f) Ansprechen der ersten Pumpe (21a), die dem ersten Durchgangskanal (19a) zugeordnet ist, zur Entnahme des angeforderten Mediums (13a) aus dem Behältnis (11 a) und zur Förderung des Mediums (13a) zu dem ersten Zielgerät (12a).
